(19) Europäisches Patentamt
European Patent Office
Office européen des brevets

(11) **EP 4 715 368 A1**

(12) **EUROPEAN PATENT APPLICATION**
published in accordance with Art. 153(4) EPC

(43) Date of publication:
**25.03.2026 Bulletin 2026/13**

(21) Application number: **24807005.4**

(22) Date of filing: **25.04.2024**

(51) International Patent Classification (IPC):
*G01N 21/21* (2006.01)    *G01N 21/57* (2006.01)
*G06T 7/40* (2017.01)    *G06V 10/14* (2022.01)

(52) Cooperative Patent Classification (CPC):
**G01N 21/21; G01N 21/57; G06T 7/40; G06V 10/14**

(86) International application number:
**PCT/JP2024/016191**

(87) International publication number:
**WO 2024/237051 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.05.2023 JP 2023081370**

(71) Applicant: **Sony Group Corporation
Tokyo 108-0075 (JP)**

(72) Inventors:
• **KAMIO, Kazunori
Tokyo 108-0075 (JP)**
• **ICHIHASHI, Hideyuki
Tokyo 108-0075 (JP)**
• **TOKIZAKI, Yuki
Tokyo 108-0075 (JP)**

(74) Representative: **MFG Patentanwälte
Meyer-Wildhagen Meggle-Freund
Gerhard PartG mbB
Amalienstraße 62
80799 München (DE)**

(54) **INFORMATION PROCESSING DEVICE AND METHOD**

(57)    The present disclosure relates to an information processing device and method to make it possible to suppress degradation of the quality of material information.

Roughness estimation of estimating roughness of a surface of a 3D object is executed using a cross-polarization image and a parallel-polarization image, and a roughness map as distribution information of the roughness corresponding to the parallel-polarization image is generated. The cross-polarization image is a captured image generated by cross-polarization imaging. The parallel-polarization image is a captured image generated by parallel-polarization imaging. The present disclosure may be applied to, for example, an information processing device, an electronic device, an information processing method, a program or the like.

FIG. 5

## Description

TECHNICAL FIELD

The present disclosure relates to an information processing device and method, and more particularly relates to an information processing device and method capable of suppressing the degradation of the quality of material information.

BACKGROUND ART

In the related art, for example, as a method for 3D modeling of a 3D object having a three-dimensional shape, such as photogrammetry, there is a method in which the 3D object is imaged from multiple directions and 3D data is generated on the basis of a plurality of captured images.

Meanwhile, as a method of rendering a texture of such a 3D model, there is a method called physical based rendering (PBR) in which reflection, refraction, and the like of light are measured on the basis of physical behavior and rendering is strictly performed. In the case of the physical based rendering, optical characteristics based on the physical behavior of the surface of the 3D object (how the object looks with light) are reproduced. For example, the material information indicating the physical behavior may include attributes such as Albedo, Roughness, Metallic, and Normal. At the time of generating the 3D data, material estimation for estimating such material information is performed as texturing in addition to the 3D modeling for estimating the three-dimensional shape of the 3D model.

However, in a case where a specular reflection component (regular reflection component) of the 3D object is included in the captured image, the quality of the material information may be degraded. On the other hand, there has been an imaging method of imaging a 3D object using a polarization sensor or a polarization camera (for example, refer to Patent Documents 1 and 2). By polarizing light from a subject in a predetermined polarization direction, an imaging unit can receive light in which specular reflection components are suppressed.

CITATION LIST

PATENT DOCUMENT

Patent Document 1: WO 2022/259466 A
Patent Document 2: WO 2019/069536 A

SUMMARY OF THE INVENTION

PROBLEMS TO BE SOLVED BY THE INVENTION

However, in such an imaging method, there is a case where the specular reflection components cannot be sufficiently suppressed. Therefore, there is a possibility that the quality of the material information is degraded.

The present disclosure has been made in view of such a situation, and an object thereof is to make it possible to suppress the degradation of the quality of material information.

SOLUTIONS TO PROBLEMS

An information processing device according to an aspect of the present technology includes a roughness map generation unit that executes roughness estimation of estimating roughness of a surface of a 3D object using a cross-polarization image and a parallel-polarization image, and generates a roughness map as distribution information of the roughness corresponding to the parallel-polarization image, in which the cross-polarization image is a captured image generated by cross-polarization imaging, the parallel-polarization image is a captured image generated by parallel-polarization imaging, the captured image is generated by irradiating a subject with light from a light emitting unit and receiving light from the subject with an imaging unit, in a case of the cross-polarization image, light from the light emitting unit is polarized in a first polarization direction, and light from the subject is polarized in a second polarization direction perpendicular to the first polarization direction, and in a case of the parallel-polarization image, light from the light emitting unit is polarized in the first polarization direction, and light from the subject is polarized in the first polarization direction.

An information processing method according to an aspect of the present technology includes executing roughness estimation of estimating roughness of a surface of a 3D object using a cross-polarization image and a parallel-polarization image, and generating a roughness map as distribution information of the roughness corresponding to the parallel-polarization image, in which the cross-polarization image is a captured image generated by cross-polarization imaging, the parallel-polarization image is a captured image generated by parallel-polarization imaging, the captured image is generated by irradiating a subject with light from a light emitting unit and receiving light from the subject with an imaging unit, in a case of the cross-polarization image, light from the light emitting unit is polarized in a first polarization direction, and light from the subject is polarized in a second polarization direction perpendicular to the first polarization direction, and in a case of the parallel-polarization image, light from the light emitting unit is polarized in the first polarization direction, and light from the subject is polarized in the first polarization direction.

In the information processing device and method according to the aspect of the present technology, the roughness estimation of estimating the roughness of the surface of the 3D object is executed by using the cross-polarization image and the parallel-polarization image, and the roughness map as the distribution information of the roughness corresponding to the parallel-polarization image is generated.

BRIEF DESCRIPTION OF DRAWINGS

Fig. 1 is a diagram for describing an overview of photogrammetry.
Fig. 2 is a diagram illustrating an example of a material estimation method.
Fig. 3 is a diagram illustrating an example of a state of cross-polarization imaging.
Fig. 4 is a diagram illustrating an example of a state of parallel-polarization imaging.
Fig. 5 is a diagram illustrating an example of a state of roughness estimation.
Fig. 6 is a diagram illustrating an example of a state of metallic estimation.
Fig. 7 is a diagram for describing resolution increasing.
Fig. 8 is a block diagram illustrating a main configuration example of a 3D data generation device.
Fig. 9 is a flowchart illustrating an example of a flow of 3D data generation processing.
Fig. 10 is a diagram illustrating an example of a state of integration of material information.
Fig. 11 is a diagram illustrating an example of a material estimation method.
Fig. 12 is a diagram illustrating an example of a state of integration of a roughness map.
Fig. 13 is a diagram illustrating an example of derivation of a confidence level.
Fig. 14 is a diagram illustrating an example of a state of integration of a roughness map.
Fig. 15 is a block diagram illustrating a main configuration example of a roughness estimation unit.
Fig. 16 is a block diagram illustrating a main configuration example of a roughness integration unit.
Fig. 17 is a flowchart illustrating an example of a flow of 3D data generation processing.
Fig. 18 is a flowchart illustrating an example of a flow of roughness estimation processing.
Fig. 19 is a flowchart illustrating an example of a flow of roughness integration processing.
Fig. 20 is a block diagram illustrating a main configuration example of an imaging device.
Fig. 21 is a flowchart illustrating an example of a flow of imaging processing.
Fig. 22 is a flowchart illustrating an example of a flow of imaging processing.
Fig. 23 is a block diagram illustrating a main configuration example of a computer.

MODE FOR CARRYING OUT THE INVENTION

Hereinafter, modes for carrying out the present disclosure (hereinafter, referred to as embodiments) will be described. Note that the description will be made in the following order.

1. Documents and the Like Supporting Technical Content and Technical Terms
2. Material Estimation
3. Utilization of Cross-Polarization Image and Parallel-Polarization Image
4. First Embodiment (3D Data Generation Device)
5. Integration of Material Information
6. Second Embodiment (3D Data Generation Device)
7. Third Embodiment (Imaging Device)
8. Supplementary Note

<1. Documents and the Like Supporting Technical Content and Technical Terms>

The scope disclosed in the present technology includes not only the contents described in the embodiments but also the contents described in the following patent document and the like known at the time of filing, the contents of other documents referred to in the following patent document, and the like.
Patent Document 1: (described above)
Patent Document 2: (described above)

That is, the contents described in the above-described patent document, the contents of other documents referred to in the above-described patent document, and the like are also grounds for determining the support requirement.

<2. Material Estimation>

<Photogrammetry>

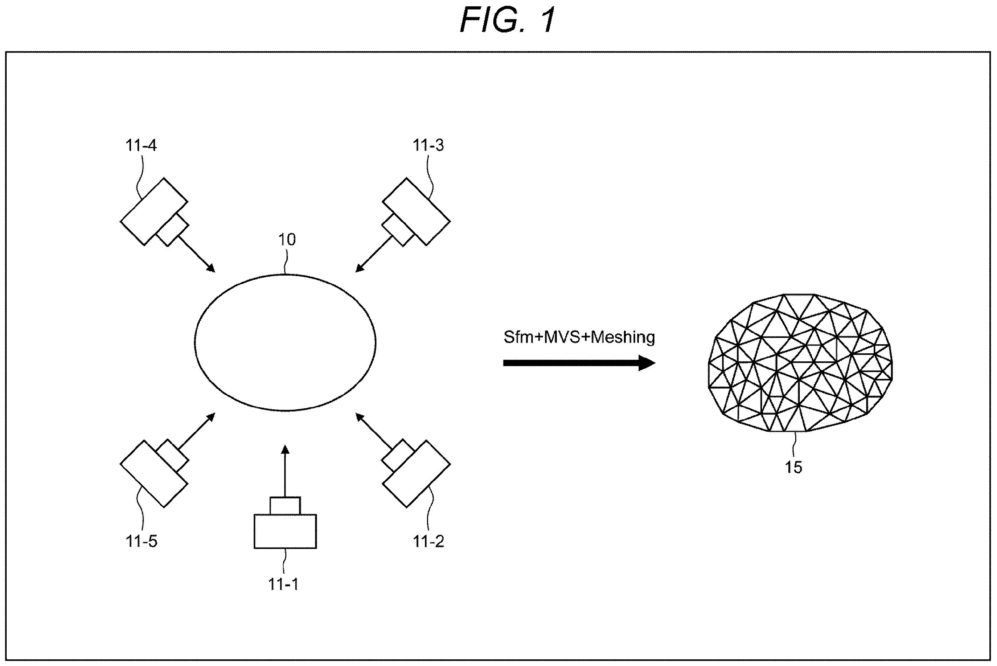

In the related art, for example, as a method for 3D modeling of a 3D object having a three-dimensional shape, such as photogrammetry, there is a method in which the 3D object is imaged from multiple directions and 3D data is generated on the basis of a plurality of captured images.
Photogrammetry is a method of reconstructing a highly accurate three-dimensional model from multiple images captured from various viewpoints, by using the principle of triangulation. Note that the "accuracy" of the 3D data (3D model) in the present specification may include not only reproducibility (correctness, fineness, or the like) of the three-dimensional shape of a target 3D object but also reproducibility (correctness, fineness, or the like) of the texture applied to the surface of the 3D model. For example, as illustrated in Fig. 1, cameras 11-1 to 11-5 image a 3D object 10 from multiple viewpoints to obtain multiple captured images. Then, processing called structure from motion (SfM) and processing called multi view stereo (MVS) are performed using these captured images and the like, and meshing and texturing are further performed as post-processing to generate 3D data 15.

In SfM, for example, corresponding points are searched for among the captured images, the position and posture of the camera are derived by epipolar constraint, and the position of each corresponding point in a three-dimensional space is specified by triangulation based on the position and posture of the camera. In the present specification, a point on the three-dimensional space is also referred to as a three-dimensional point. That is, the three-dimensional point corresponding to each corresponding point is specified. Then, the entirety of a three-dimensional point cloud specified as described above is optimized by bundle adjustment.

Moreover, in MVS, for example, dense corresponding point search is performed using the three-dimensional point cloud derived as described above, and three-dimensional points are added.

As described above, in photogrammetry, since a global optimization calculation called bundle adjustment that minimizes errors is performed, highly accurate results can be obtained, but the calculation load is large. Furthermore, because the photogrammetry is based on geometric calculation rather than physical measurement, in principle, the higher the resolution of the images used, the more accurately the model can be reconstructed.

<Physical Based Rendering>

Meanwhile, as a method of rendering a texture of such a 3D model, there is a method called physical based rendering (PBR) in which reflection, refraction, and the like of light are measured on the basis of physical behavior and rendering is strictly performed. That is, in the case of the physical based rendering, optical characteristics based on the physical behavior of the surface of the 3D object (how the object looks with light) are reproduced. For example, the material information indicating the physical behavior may include attributes such as Albedo, Roughness, Metallic, and Normal.

Albedo is an attribute that defines the color of a material. Albedo is also referred to as the base color. Roughness is an attribute that controls the roughness (diffuseness of reflected light) or smoothness of a surface of a material. This attribute can determine the clarity or blurriness of the reflection on the material. Metallic is an attribute that defines whether or not the material is metallic (or non-metallic). In "pure surfaces" such as pure metal, stone, or plastic, this metallic is set to either "0" or "1". Normal is an attribute that controls the irregularities on the surface of an object.

At the time of generating the 3D data, material estimation of estimating such material information is performed as texturing in addition to the 3D modeling such as the above-described photogrammetry.

<Influence of Specular Reflection Component on Material Estimation>

However, in a case where a specular reflection component (regular reflection component) of the 3D object is included in the captured image, the quality of the material information may be degraded. On the other hand, there has been an imaging method of imaging a 3D object using a polarization sensor or a polarization camera as disclosed in Patent Documents 1 and 2, for example. By polarizing light from a subject in a predetermined polarization direction, an imaging unit can receive light in which specular reflection components are suppressed.

However, in such an imaging method, there is a case where the specular reflection components cannot be sufficiently suppressed. Therefore, there is a possibility that the quality of the material information is degraded. For example, since the captured image includes the specular reflection component, there is a possibility that the accuracy of estimating the roughness and metallic is degraded.

<3. Utilization of Cross-Polarization Image and Parallel-Polarization Image>

<Method 1>

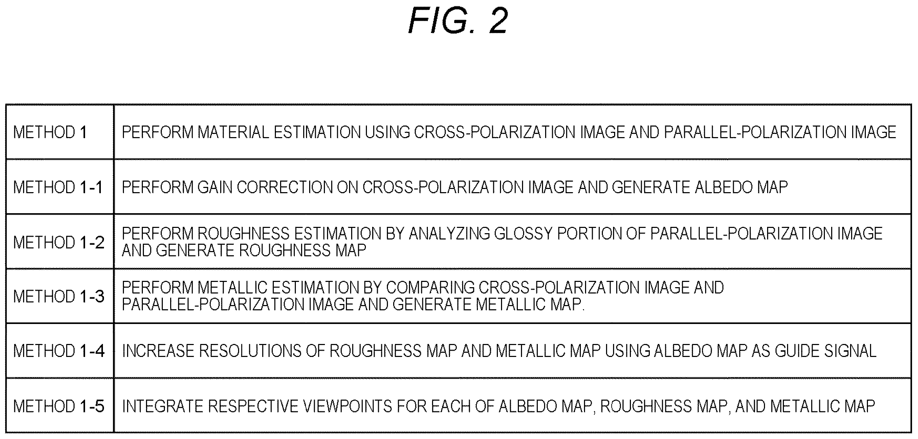

Accordingly, as illustrated in the top row of a table in Fig. 2, material estimation is performed using a cross-polarization image and a parallel-polarization image (Method 1).

< Cross-Polarization Imaging>

A cross-polarization image is a captured image generated by cross-polarization imaging. This captured image is generated by irradiating a subject with light from a light emitting unit and receiving light from the subject by an imaging unit. In the case of cross-polarization imaging, light from the light emitting unit and light from the subject are polarized in directions orthogonal to each other. That is, light from the light emitting unit is polarized in a first polarization direction, and light from the subject is polarized in a second polarization direction perpendicular to the first polarization direction.

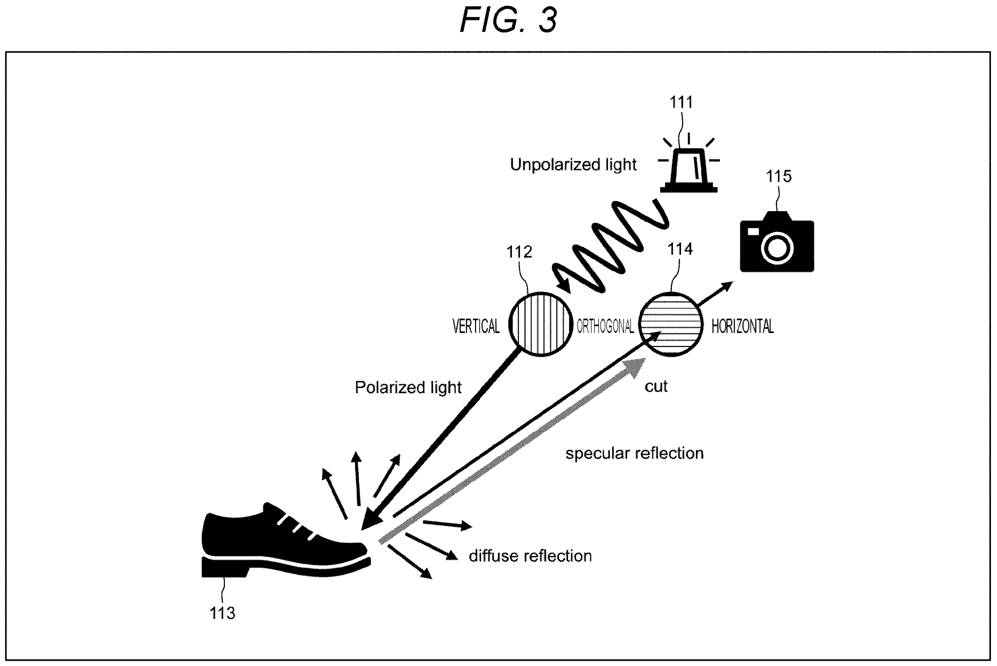

For example, as illustrated in Fig. 3, in the case of cross-polarization imaging, a light emitting unit 111 emits light, the light from the light emitting unit 111 is polarized in a predetermined direction (first direction) by a polarization filter 112 or the like, and a 3D object 113 is irradiated with the polarized irradiation light. At that time, the irradiation light is emitted such that, in the reflected light that is reflected from the 3D object 113, the component due to the irradiation light becomes dominant. Then, an imaging unit 115 generates a captured image having the 3D object 113 as a subject by receiving the reflected light. At that time, the reflected light is polarized in a second direction perpendicular to the first direction (that is, orthogonal to the first direction) by a polarization filter 114 or the like, and is received by the imaging unit 115.

Note that the reflection of light on the 3D object 113 includes specular reflection (regular reflection) and diffuse reflection. That is, the reflected light of the 3D object 113 may include a specular reflection component that has undergone specular reflection and a diffuse reflection component that has undergone diffuse reflection. In the case of cross-polarization imaging, since the polarization direction of the polarization filter 114 is orthogonal to the polarization direction of the polarization filter 112, the specular reflection component of the irradiation light from the light emitting unit 111 can be suppressed.

That is, in the case of such cross-polarization imaging, the imaging unit 115 mainly receives the diffuse reflection component. Therefore, the cross-polarization image mainly includes the diffuse reflection component (diffuse component).

<Parallel-Polarization Imaging>

On the other hand, a parallel-polarization image is a captured image generated by parallel-polarization imaging. This captured image is generated by irradiating a subject with light from a light emitting unit and receiving light from the subject by an imaging unit. In the case of parallel-polarization imaging, light from the light emitting unit and light from the subject are polarized in directions parallel to each other (the same direction). That is, light from the light emitting unit is polarized in the first polarization direction, and light from the subject is polarized in the first polarization direction.

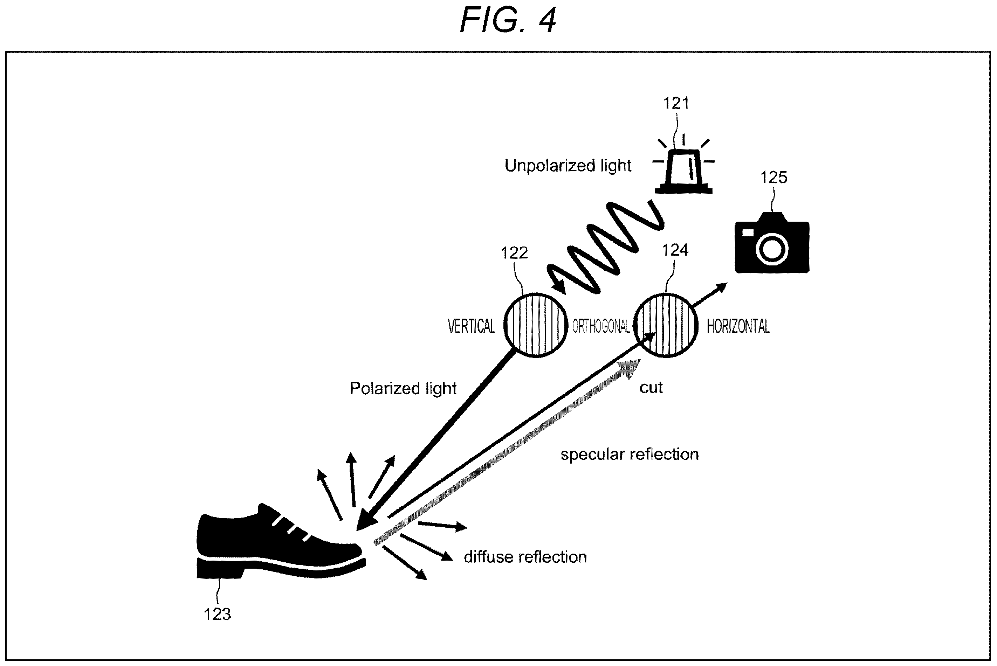

For example, as illustrated in Fig. 4, in the case of parallel-polarization imaging, a light emitting unit 121 emits light, the light from the light emitting unit 121 is polarized in a predetermined direction (first direction) by a polarization filter 122 or the like, and a 3D object 123 is irradiated with the polarized irradiation light. At that time, the irradiation light is emitted such that, in the reflected light that is reflected from the 3D object 123, the component due to the irradiation light becomes dominant. Then, an imaging unit 125 generates a captured image having the 3D object 123 as a subject by receiving the reflected light. At that time, the reflected light is polarized in the first direction by a polarization filter 124 or the like, and is received by the imaging unit 125.

In the case of parallel-polarization imaging, since the polarization direction of the polarization filter 124 is orthogonal to the polarization direction of the polarization filter 122, the imaging unit 125 receives both the specular reflection component and the diffuse reflection component. Therefore, the parallel-polarization image includes a diffuse reflection component (diffuse component) and a specular reflection component (specular component).

<Material Estimation>

By using such cross-polarization images and parallel-polarization images having different characteristics, the information processing device can perform material estimation more accurately. Therefore, the information processing device can suppress degradation of the quality of material information.

<Method 1-1>

In a case where Method 1 is applied, the attributes included in this material information may be any type. For example, as illustrated in the second row from the top of the table in Fig. 2, a cross-polarization image may be gain-corrected to generate an albedo map (Method 1-1). The albedo map is distribution information of albedo corresponding to a captured image (a parallel-polarization image or a cross-polarization image). That is, in the case of Method 1-1, the albedo map is obtained by multiplying a gain to each pixel value (mainly a diffuse component) of the cross-polarization image.

For example, the information processing device may include an albedo map generation unit that generates an albedo map by gain-correcting a cross-polarization image. For example, the albedo map generation unit may calculate a gain that minimizes the difference between a rendered image and an actually captured cross-polarization, and generate an albedo map by multiplying the cross-polarization image by the gain.

By doing so, the albedo map generation unit can generate a higher-resolution albedo map. Therefore, the information processing device can suppress the degradation of the quality of the albedo map (that is, material information).

<Method 1-2>

In a case where Method 1 is applied, for example, as illustrated in the third row from the top of the table in Fig. 2, roughness estimation may be performed by analyzing a glossy portion of a parallel-polarization image, and a roughness map may be generated (Method 1-2). The roughness map is distribution information of roughness corresponding to a captured image (a parallel-polarization image or a cross-polarization image).

For example, the information processing device may include a roughness map generation unit that executes roughness estimation of estimating the roughness of a surface of a 3D object by using the cross-polarization image and the parallel-polarization image, and generates a roughness map as the distribution information of roughness corresponding to the parallel-polarization image. Furthermore, for example, in an information processing method executed by the information processing device, roughness estimation of estimating the roughness of a surface of a 3D object may be executed by using the cross-polarization image and the parallel-polarization image, and a roughness map as the distribution information of roughness corresponding to the parallel-polarization image may be generated.

As described above, the cross-polarization image mainly includes the diffuse reflection component (diffuse component). The parallel-polarization image includes a diffuse reflection component (diffuse component) and a specular reflection component (specular component). By using such cross-polarization images and parallel-polarization images having different characteristics, the information processing device can perform roughness estimation more accurately. Therefore, the information processing device can suppress the degradation of the quality of the roughness map (that is, material information).

The method of roughness estimation using a cross-polarization image and a parallel-polarization image may be any method. For example, the roughness map generation unit may detect, using a difference image between the parallel-polarization image and the cross-polarization image, a flash region included in the parallel-polarization image, analyze the detected flash region, and execute roughness estimation on the basis of an analysis result of the flash region.

Roughness is an attribute indicating the diffuseness of reflected light, and indicates the extent to which irradiation light is specularly reflected (that is, the extent to which the reflected light is diffused) in a 3D object. In other words, in a case where, in a parallel-polarization image, a portion (that is, a portion in which the irradiation light is specularly reflected) including a specular reflection component of irradiation light (also referred to as flash light) is defined as a flash region, roughness has a correlation with a point spread function (PSF) of the flash region.

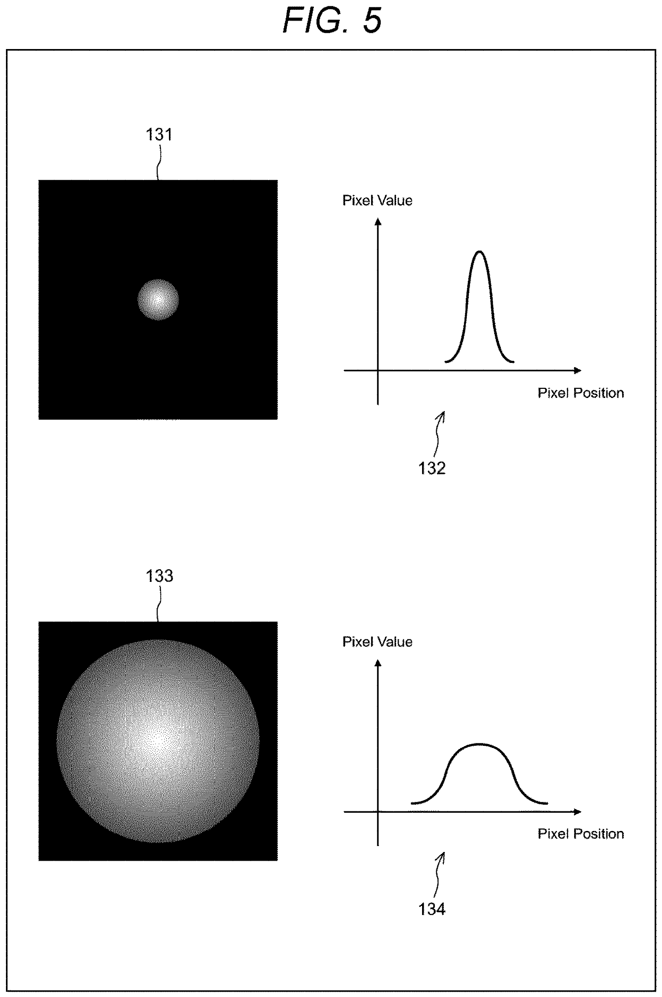

In Fig. 5, a parallel-polarization image 131 and a parallel-polarization image 133 illustrate examples of the state of the flash region included in the parallel-polarization image. In the parallel-polarization image 131 and the parallel-polarization image 133, a pixel value (luminance value) of each pixel is illustrated in black to white. Pixels closer to black indicate lower luminance, and pixels closer to white indicate higher luminance. In the parallel-polarization image 131 and the parallel-polarization image 133, a flash region including a specular reflection component is formed in pixels near the center, and appears white (that is, high luminance). A graph 132 illustrates a state of distribution of pixel values of the flash region in the parallel-polarization image 131. A graph 134 illustrates a state of distribution of pixel values of the flash region in the parallel-polarization image 133.

For example, in a case where flash light is strongly specularly reflected on a 3D object (in a case where the diffuse reflection component is small), the flash region is formed relatively small as in the parallel-polarization image 131 in Fig. 5, and the change in pixel values becomes steep within a relatively narrow range as illustrated in the graph 132. A material having small roughness tends to specularly reflect. Therefore, in this case, the spread of the flash region becomes relatively small as in the example of the parallel-polarization image 131, and the change in pixel values becomes steep within a relatively narrow range as in the example of the graph 132.

In contrast, in a case where the flash light is weakly specularly reflected on a 3D object (in a case where the diffuse reflection component is large), the flash region is formed relatively large as in the parallel-polarization image 133 in Fig. 5, and the change in pixel values becomes gradual within a relatively wide range as illustrated in the graph 134. A material having large roughness tends to diffusely reflect. Therefore, in this case, the spread of the flash region becomes relatively large as in the example of the parallel-polarization image 133, and the change in pixel values becomes gradual within a relatively wide range as in the example of the graph 134.

In this way, there is a correlation between the state of spread of the flash region (how the flash region spreads) and roughness. Therefore, in a case where the state of spread of the flash region (that is, PSF) is known, roughness can be easily and accurately estimated from the PSF by utilizing such a correlation.

Note that the state of spread of the flash region may be obtained by any method. For example, a flash region may be detected in a parallel-polarization image or a cross-polarization image, and the state of spread may be obtained by analyzing the flash region. As described above, the parallel-polarization image includes a diffuse reflection component (diffuse component) and a specular reflection component (specular component), and the cross-polarization image mainly includes a diffuse reflection component (diffuse component). Therefore, a difference image obtained by subtracting a cross-polarization image from a parallel-polarization image (image obtained by subtracting each pixel value of the cross-polarization image from the corresponding pixel value of the parallel-polarization image) mainly includes a specular reflection component (specular component). As described above, since the flash region is a specular reflection component (specular component), it is possible to detect and analyze the flash region while suppressing the influence of unnecessary diffuse reflection components, by using the difference image. That is, by using the difference image, it is possible to obtain the state of spread of the flash region more easily and accurately than in a case where a parallel-polarization image or a cross-polarization image is used.

Therefore, the roughness map generation unit may generate a difference image between a parallel-polarization image and a cross-polarization image as described above, detect a flash region by using the difference image, analyze how the flash region spreads, and estimate roughness according to the analysis result. By doing so, the roughness map generation unit can perform roughness estimation more easily and accurately.

Note that, by using such a principle, a relationship between the state of spread of a flash region in a case where a material is irradiated with flash light and roughness of the material may be learned, and the state of spread of the flash region may be input into a neural network corresponding to the learning result, thereby obtaining a roughness estimation result (generating a roughness map). Furthermore, instead of the state of spread of the flash region, a difference image obtained by subtracting a cross-polarization image from a parallel-polarization image may be applied. That is, a relationship between a difference image in a case where a material is irradiated with flash light and roughness of the material may be learned, and the difference image may be input into a neural network corresponding to the learning result, thereby obtaining a roughness estimation result (generating a roughness map). Furthermore, instead of the difference image, a parallel-polarization image and a cross-polarization image may be applied. That is, a relationship between a parallel-polarization image and a cross-polarization image in a case where a material is irradiated with flash light and roughness of the material may be learned, and the parallel-polarization image and the cross-polarization image may be input into a neural network corresponding to the learning result, thereby obtaining a roughness estimation result (generating a roughness map).

<Method 1-3>

In a case where Method 1 is applied, for example, as illustrated in the fourth row from the top of the table in Fig. 2, metallic estimation may be performed by comparing a cross-polarization image and a parallel-polarization image, and a metallic map may be generated (Method 1-3). The metallic map is distribution information of metallic corresponding to a captured image (a parallel-polarization image or a cross-polarization image).

For example, the information processing device may include a metallic map generation unit that executes metallic estimation by using a cross-polarization image and a parallel-polarization image, and generates a metallic map. Generally, it has been difficult to perform metallic estimation from a cross-polarization image or a parallel-polarization image. By using a cross-polarization image and a parallel-polarization image, the metallic map generation unit can perform metallic estimation easily and accurately. Therefore, the information processing device can suppress the degradation of the quality of the metallic map (that is, material information).

The method of metallic estimation using a cross-polarization image and a parallel-polarization image may be any method. For example, in a case where the pixel value of the parallel-polarization image is sufficiently larger than that of the cross-polarization image for a processing target region, the metallic map generation unit may estimate that the subject (the material on the surface of the 3D object) is metallic.

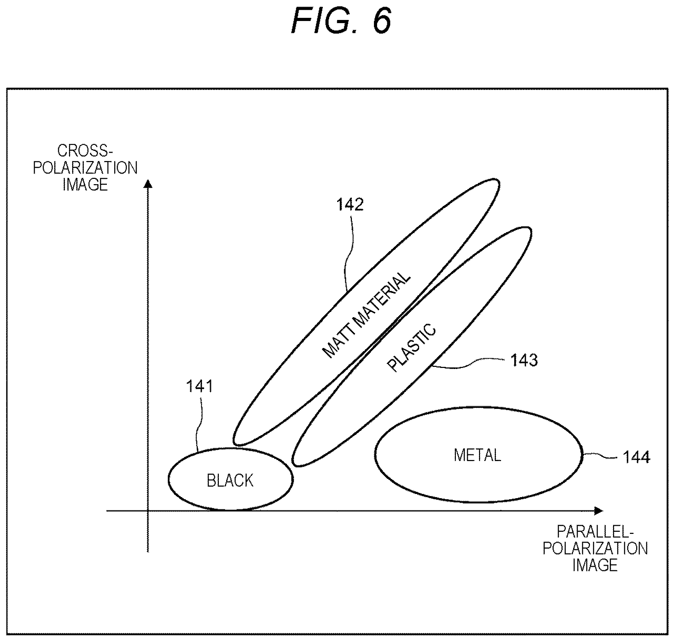

The property of the material can be estimated on the basis of the magnitudes of the specular reflection component and the diffuse reflection component, for example, as illustrated in the graph in Fig. 6. For example, in the graph in Fig. 6, in the case of a region 141, both the pixel value of the parallel-polarization image and the pixel value of the cross-polarization image are small. Therefore, in a case where a combination of the pixel value of the parallel-polarization image and the pixel value of the cross-polarization image is positioned within the region 141, the material corresponding to that pixel is estimated to be a black material. In contrast, in the case of a region 142, the pixel value of the parallel-polarization image and the pixel value of the cross-polarization image are approximately equivalent. Therefore, in a case where a combination of the pixel value of the parallel-polarization image and the pixel value of the cross-polarization image is positioned within the region 142, the material corresponding to that pixel is estimated to be a matt material. Furthermore, in the case of a region 143, the pixel value of the parallel-polarization image relative to the pixel value of the cross-polarization image is slightly larger than in the case of region 142. That is, this material is glossier than a matt material. Therefore, in a case where a combination of the pixel value of the parallel-polarization image and the pixel value of the cross-polarization image is positioned within the region 143, the material corresponding to that pixel is estimated to be plastic. Furthermore, in the case of a region 144, the pixel value of the cross-polarization image is small and the pixel value of the parallel-polarization image is large. That is, this material has very strong gloss. Therefore, in a case where a combination of the pixel value of the parallel-polarization image and the pixel value of the cross-polarization image is positioned within the region 144, the material corresponding to that pixel is estimated to be metal.

The metallic map generation unit may obtain a relationship between pixel values of such a cross-polarization image and a parallel-polarization image and the property of a material, and may estimate whether or not the material is metallic on the basis of the relationship. For example, the metallic map generation unit may estimate whether or not the material corresponding to a pixel is metal according to whether or not the combination of the pixel value of the parallel-polarization image and the pixel value of the cross-polarization image is positioned within the region 144 of the graph in Fig. 6, that is, according to whether or not the pixel value of the parallel-polarization image is sufficiently larger than that of the cross-polarization image. By doing so, the metallic map generation unit can perform metallic estimation easily and accurately.

Note that the metallic estimation result may be expressed by two values of "0" (non-metallic) or "1" (metallic). Furthermore, the metallic estimation result may also be expressed by metallic-likeness (an arbitrary value within a section from 0 to 1).

Furthermore, the processing target region in which metallic estimation is performed may be any region. For example, the processing target region may be one pixel, and metallic estimation may be performed for each pixel. Furthermore, the processing target region may be a region including a plurality of pixels, and metallic estimation may be performed for each region (that is, for each plurality of pixels).

Note that, by using such a principle, a relationship between a difference image obtained by subtracting a cross-polarization image from a parallel-polarization image and metallic-likeness may be learned, and the difference image may be input into a neural network corresponding to the learning result, thereby obtaining a metallic estimation result (generating a metallic map). Furthermore, instead of the difference image, a parallel-polarization image and a cross-polarization image may be applied. That is, a relationship between a cross-polarization image and a parallel-polarization image and metallic-likeness may be learned, and the parallel-polarization image and the cross-polarization image may be input into a neural network corresponding to the learning result, thereby obtaining a metallic estimation result (generating a metallic map).

<Method 1-4>

The roughness map and the metallic map generated as described above have low resolution. Therefore, in a case where Method 1 is applied, for example, as illustrated in the fifth row from the top of the table in Fig. 2, the resolution of the roughness map and the metallic map may be increased by using the albedo map as a guide signal (Method 1-4).

For example, the information processing device may further include a resolution increasing unit that increases the resolution of the roughness map by using the albedo map as a guide signal. Furthermore, the information processing device may further include a resolution increasing unit that increases the resolution of the metallic map by using the albedo map as a guide signal. Furthermore, the information processing device may further include a resolution increasing unit that increases the resolution of the roughness map and the metallic map by using the albedo map as a guide signal. That is, the resolution increasing unit may increase the resolution of at least one of the roughness map and the metallic map by using the albedo map as a guide signal.

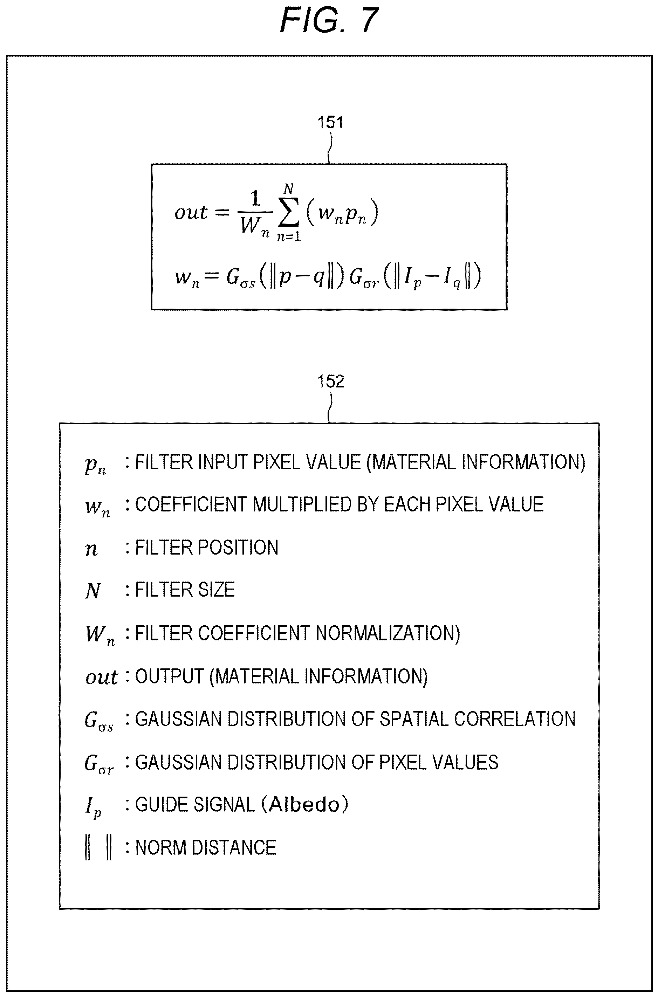

For example, as illustrated in a square 151 in Fig. 7, the resolution of material information (at least one of the roughness map and the metallic map) may be increased by using the following Expressions (1) and (2).

[Math 1]

$$out = \frac{1}{W_n} \sum_{n=1}^{N} \left( w_n p_n \right)$$

$$\cdots (1)$$

[Math 2]

$$w_n = G_{\sigma s} \left( \| p - q \| \right) G_{\sigma r} \left( \| I_p - I_q \| \right)$$

$$\cdots (2)$$

Note that, as illustrated in a square 152 in Fig. 7, each parameter in Expressions (1) and (2) indicates values as follows. [Math 3]

$p_n$ : Filter input pixel value (material information)

$w_n$ : Coefficient multiplied by each pixel value

$n$ : Filter position

$N$ : Filter size

$W_n$ : Filter coefficient normalization

$out$ : Output (material information)

$G_{\sigma s}$ : Gaussian distribution of spatial correlation

$G_{\sigma r}$ : Gaussian distribution of pixel values

$I_p$ : Guide signal (Albedo)

$\| \ \|$: Norm distance

By doing so, the resolution increasing unit can increase the resolution of at least one of the roughness map and the metallic map. Therefore, the information processing device can suppress degradation of the quality of material information.

<Method 1-5>

In a case where Method 1 is applied, for example, as illustrated in the bottom row of the table in Fig. 2, for each of the albedo map, the roughness map, and the metallic map, respective viewpoints map may be integrated (Method 1-5). As described with reference to Fig. 1, in the case of 3D modeling such as photogrammetry, a 3D model is generated using a plurality of captured images of different viewpoints. The material information (for example, the albedo map, the roughness map, and the metallic map) is generated corresponding to captured images (the parallel-polarization image and the cross-polarization image) of each viewpoint as described above. By integrating the material information of each viewpoint, material information corresponding to the entire 3D model can be generated.

Note that "integration" in the present specification refers to combining a plurality of pieces of material information (maps) into one piece of material information (map). The combining method may be any method. For example, edges of a plurality of maps may be connected to generate a map wider than the original map. Furthermore, in a case where there are redundant portions between maps (portions corresponding to the same position of the 3D object), those portions may be superimposed (combined). Furthermore, an entire one map may be superimposed (combined) on an entire other map. Furthermore, the sizes of the maps do not need to be the same, and the entire one map may be superimposed (combined) on a part of another map. Furthermore, the combining (superimposing) method may be any method. For example, a value of any one map of the plurality of maps to be combined (superimposed) may be selected. Note that the number of maps to be integrated may be any number as long as it is plural. Note that each of the above-described methods may be applied in combination with any other method. For example, any plurality of methods among Methods 1-1 to 1-5 may be applied. Furthermore, these methods and other methods may be applied in combination.

<4. First Embodiment>

<3D Data Generation Device>

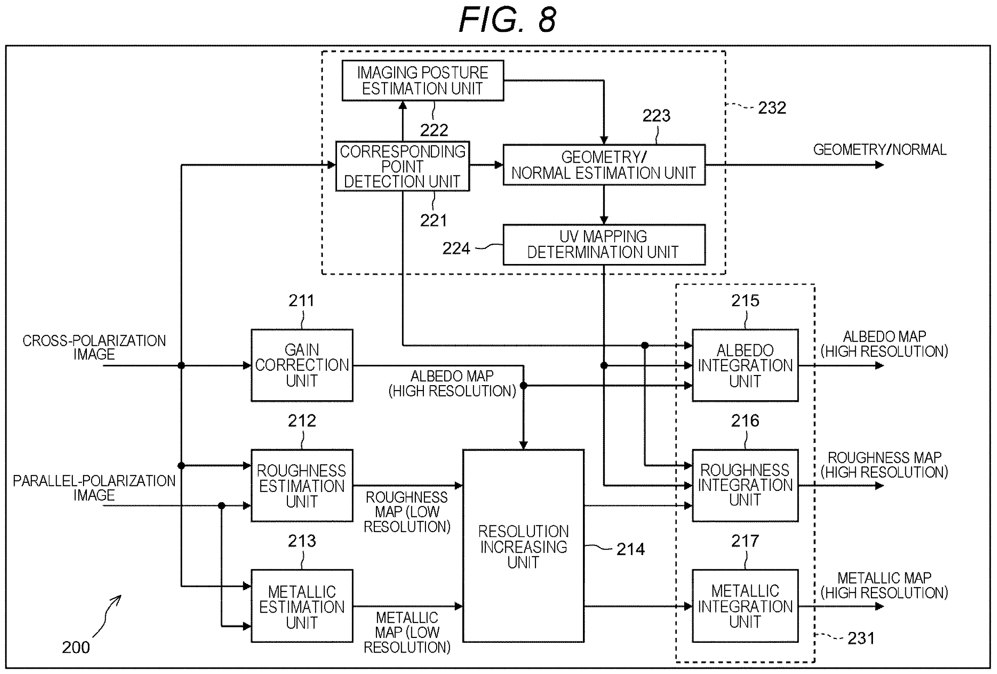

Fig. 8 is a block diagram illustrating a main configuration example of a 3D data generation device, which is an embodiment of the information processing device to which the present technology described in <3. Utilization of Cross-Polarization Image and Parallel-Polarization Image> is applied. A 3D data generation device 200 illustrated in Fig. 8 is a device that performs processing such as 3D modeling and texturing on the basis of a cross-polarization image obtained by capturing a 3D object with cross-polarization imaging and a parallel-polarization image obtained by capturing the 3D object with parallel-polarization imaging, and generates 3D data (geometry and attributes of the 3D model).

Note that the cross-polarization image and the parallel-polarization image input to the 3D data generation device 200 form a pair of images corresponding to the same viewpoint. That is, for one viewpoint, at least one cross-polarization image and one parallel-polarization image are input. Furthermore, cross-polarization images and parallel-polarization images for any number of viewpoints (any number of pairs) may be input to the 3D data generation device 200. For example, the cross-polarization image and the parallel-polarization image corresponding to each of the plurality of viewpoints may be input.

As described above, the 3D data generation device 200 may apply the present technology described in <3. Utilization of Cross-Polarization Image and Parallel-Polarization Image>. For example, the 3D data generation device 200 may apply Method 1 described above. Furthermore, the 3D data generation device 200 may also apply the above-described Method 1-1. Furthermore, the 3D data generation device 200 may also apply the above-described Method 1-2. Furthermore, the 3D data generation device 200 may also apply the above-described Method 1-3. Furthermore, the 3D data generation device 200 may also apply the above-described Method 1-4. Furthermore, the 3D data generation device 200 may also apply the above-described Method 1-5. Furthermore, the 3D data generation device 200 may apply any combination of the plurality of methods.

As illustrated in Fig. 8, the 3D data generation device 200 includes a gain correction unit 211, a roughness estimation unit 212, a metallic estimation unit 213, a resolution increasing unit 214, an albedo integration unit 215, a roughness integration unit 216, and a metallic integration unit 217. Furthermore, the 3D data generation device 200 further includes a corresponding point detection unit 221, an imaging posture estimation unit 222, a geometry/normal estimation unit 223, and a UV mapping determination unit 224. Note that the albedo integration unit 215, the roughness integration unit 216, and the metallic integration unit 217 may be collectively configured as a single processing unit (integration unit 231). Furthermore, the corresponding point detection unit 221, the imaging posture estimation unit 222, the geometry/normal estimation unit 223, and the UV mapping determination unit 224 may be collectively configured as a single processing unit (geometry generation unit 232).

The gain correction unit 211 performs processing related to the generation of an albedo map. That is, the gain correction unit 211 may also be referred to as the albedo map generation unit. For example, the gain correction unit 211 may acquire the cross-polarization image input to the 3D data generation device 200. Furthermore, the gain correction unit 211 may generate the albedo map by multiplying (gain-correcting) the cross-polarization image (each pixel value thereof) by a gain. Furthermore, the gain correction unit 211 may supply the generated albedo map to the resolution increasing unit 214. Furthermore, the gain correction unit 211 may also supply the generated albedo map to the albedo integration unit 215.

The roughness estimation unit 212 performs processing related to the generation of a roughness map. That is, the roughness estimation unit 212 may also be referred to as the roughness map generation unit. For example, the roughness estimation unit 212 may acquire the cross-polarization image and the parallel-polarization image of the same viewpoint, which are input to the 3D data generation device 200. Furthermore, the roughness estimation unit 212 may perform roughness estimation using the cross-polarization image and the parallel-polarization image, and may generate a roughness map corresponding to the parallel-polarization image. In this case, the roughness estimation unit 212 may detect, using a difference image between the acquired parallel-polarization image and cross-polarization image, a flash region included in the parallel-polarization image, analyze the detected flash region, and execute roughness estimation on the basis of an analysis result of the flash region. Furthermore, the roughness estimation unit 212 may supply the generated roughness map to the resolution increasing unit 214.

The metallic estimation unit 213 performs processing related to the generation of a metallic map. That is, the metallic estimation unit 213 may also be referred to as the metallic map generation unit. For example, the metallic estimation unit 213 may acquire the cross-polarization image and the parallel-polarization image of the same viewpoint, which are input to the 3D data generation device 200. Furthermore, the metallic estimation unit 213 may perform metallic estimation using the cross-polarization image and the parallel-polarization image, and may generate a metallic map corresponding to the parallel-polarization image. In this case, in a case where the pixel value of the parallel-polarization image is sufficiently larger than that of the cross-polarization image for a processing target region, the metallic estimation unit 213 may estimate that the subject (the material on the surface of the 3D object) is metallic. Furthermore, the metallic estimation unit 213 may supply the generated metallic map to the resolution increasing unit 214.

The resolution increasing unit 214 performs processing related to increasing the resolution of material information. For example, the resolution increasing unit 214 may acquire the albedo map supplied from the gain correction unit 211. Furthermore, the resolution increasing unit 214 may also acquire the roughness map supplied from the roughness estimation unit 212. Furthermore, the resolution increasing unit 214 may increase the resolution of the roughness map using the albedo map as a guide signal. For example, the resolution increasing unit 214 may increase the resolution of the roughness map using the above-described Expressions (1) and (2). Furthermore, the resolution increasing unit 214 may supply the generated high-resolution roughness map to the roughness integration unit 216.

Furthermore, the resolution increasing unit 214 may acquire the metallic map supplied from the metallic estimation unit 213. Furthermore, the resolution increasing unit 214 may increase the resolution of the metallic map using the albedo map as a guide signal. For example, the resolution increasing unit 214 may increase the resolution of the metallic map using the above-described Expressions (1) and (2). Furthermore, the resolution increasing unit 214 may supply the generated high-resolution metallic map to the metallic integration unit 217.

The albedo integration unit 215 performs processing related to the integration of albedo maps of different viewpoints. For example, the albedo integration unit 215 may acquire the albedo map supplied from the gain correction unit 211. The albedo integration unit 215 may acquire albedo maps (that is, a plurality of albedo maps corresponding to parallel-polarization images of different viewpoints) for a plurality of different viewpoints. Furthermore, the albedo integration unit 215 may also acquire an overlap determination result between cross-polarization images (that is, between albedo maps) supplied from the corresponding point detection unit 221. The albedo integration unit 215 may integrate multiple albedo maps of different viewpoints on the basis of the overlap determination result. That is, the albedo integration unit 215 may integrate the albedo maps so as to combine regions determined to be overlapping regions (portions corresponding to the same position of the 3D object). Furthermore, the albedo integration unit 215 may also acquire UV information supplied from the UV mapping determination unit 224. The UV information indicates UV coordinates at which the geometry is mapped on a UV plane. The albedo integration unit 215 may map the integrated albedo map on the UV plane on the basis of the UV information. The albedo integration unit 215 may supply the albedo map (high-resolution) mapped on the UV plane to the outside of the 3D data generation device 200 as material information.

The roughness integration unit 216 performs processing related to the integration of roughness maps of different viewpoints. For example, the roughness integration unit 216 may acquire the roughness map supplied from the resolution increasing unit 214. The roughness integration unit 216 may acquire roughness maps (that is, a plurality of roughness maps corresponding to parallel-polarization images of different viewpoints) for a plurality of different viewpoints. Furthermore, the roughness integration unit 216 may also acquire an overlap determination result between cross-polarization images (that is, between roughness maps) supplied from the corresponding point detection unit 221. The roughness integration unit 216 may integrate multiple roughness maps of different viewpoints on the basis of the overlap determination result. That is, the roughness integration unit 216 may integrate the roughness maps so as to combine regions determined to be overlapping regions (portions corresponding to the same position of the 3D object). Furthermore, the roughness integration unit 216 may also acquire UV information supplied from the UV mapping determination unit 224. The roughness integration unit 216 may map the integrated roughness map on the UV plane on the basis of the UV information. The roughness integration unit 216 may supply the roughness map (high-resolution) mapped on the UV plane to the outside of the 3D data generation device 200 as material information.

The metallic integration unit 217 performs processing related to the integration of metallic maps of different viewpoints. For example, the metallic integration unit 217 may acquire the metallic map supplied from the resolution increasing unit 214. The metallic integration unit 217 may acquire metallic maps (that is, a plurality of metallic maps corresponding to parallel-polarization images of different viewpoints) for a plurality of different viewpoints. The metallic integration unit 217 may integrate multiple metallic maps of different viewpoints. The metallic integration unit 217 may supply the integrated metallic map (high-resolution) to the outside of the 3D data generation device 200 as material information.

The corresponding point detection unit 221 executes processing related to the detection of corresponding points. For example, the corresponding point detection unit 221 may acquire the cross-polarization image input to the 3D data generation device 200. The corresponding point detection unit 221 may acquire a plurality of cross-polarization images of different viewpoints. The corresponding point detection unit 221 may detect a corresponding point (a pixel corresponding to the same position of the 3D object) between the cross-polarization images. Furthermore, the corresponding point detection unit 221 may detect an overlapping region (a portion corresponding to the same position of the 3D object) between the cross-polarization images on the basis of the corresponding point. For example, the corresponding point detection unit 221 may determine whether or not a processing target pixel is included in the overlapping region. The corresponding point detection unit 221 may supply information indicating the detected corresponding point, the cross-polarization image, and the like to the imaging posture estimation unit 222. Furthermore, the corresponding point detection unit 221 may supply information indicating the detected corresponding point, the cross-polarization image, and the like to the geometry/normal estimation unit 223. Furthermore, the corresponding point detection unit 221 may supply information indicating the detected corresponding point and the like to the albedo integration unit 215. Furthermore, the corresponding point detection unit 221 may supply information indicating the detected corresponding point and the like to the roughness integration unit 216. Note that the information indicating the corresponding point may include information indicating an overlapping region determination result.

The imaging posture estimation unit 222 performs processing related to the estimation of an imaging posture. Note that the imaging posture may include the position and orientation of the imaging unit in cross-polarization imaging and parallel-polarization imaging. For example, the imaging posture estimation unit 222 may acquire the information indicating the corresponding point detected by the corresponding point detection unit 221, the cross-polarization image, and the like which are supplied from the corresponding point detection unit 221. Furthermore, the imaging posture estimation unit 222 may estimate the imaging posture on the basis of the information indicating the corresponding point and the like. Furthermore, the imaging posture estimation unit 222 may supply the information indicating the estimated imaging posture and the like to the geometry/normal estimation unit 223.

The geometry/normal estimation unit 223 performs processing related to the estimation of the geometry of a 3D model and the normals of the surface of the 3D model. For example, the geometry/normal estimation unit 223 may acquire information indicating the corresponding point detected by the corresponding point detection unit 221, the cross-polarization image, and the like, which are supplied from the corresponding point detection unit 221. Furthermore, the geometry/normal estimation unit 223 may also acquire information indicating the imaging posture supplied from the imaging posture estimation unit 222, and the like. The geometry/normal estimation unit 223 may perform geometry estimation on the basis of the information to estimate the geometry. Furthermore, the geometry/normal estimation unit 223 may also perform normal estimation on the basis of the information to estimate the normals. Furthermore, the geometry/normal estimation unit 223 may supply information indicating the estimated geometry and normals, and the like to the UV mapping determination unit 224. Furthermore, the geometry/normal estimation unit 223 may also supply information indicating the estimated geometry and normals, and the like to the outside of the 3D data generation device 200. In that case, the geometry/normal estimation unit 223 may acquire UV information supplied from the UV mapping determination unit 224. Then, the geometry/normal estimation unit 223 may map the estimated geometry and normals on the UV plane on the basis of the UV information.

The UV mapping determination unit 224 performs processing related to the mapping of geometry and the like on the UV plane. For example, the UV mapping determination unit 224 may acquire information (for example, geometry or normals estimated by the geometry/normal estimation unit 223, or both thereof) supplied from the geometry/normal estimation unit 223. The UV mapping determination unit 224 may determine a location (embedding position) where the information (for example, geometry or normals, or both thereof) is to be mapped on the UV plane. The UV mapping determination unit 224 may supply the UV information indicating the location and the like to the geometry/normal estimation unit 223. Furthermore, the UV mapping determination unit 224 may supply the UV information indicating the location and the like to the albedo integration unit 215. Furthermore, the UV mapping determination unit 224 may supply the UV information indicating the location and the like to the roughness integration unit 216.

By having the above-described configuration, the present technology described in <3. Utilization of Cross-Polarization Image and Parallel-Polarization Image> can be applied to the 3D data generation device 200. Therefore, the 3D data generation device 200 can suppress degradation of the quality of material information.

<Flow of 3D Data Generation Processing>

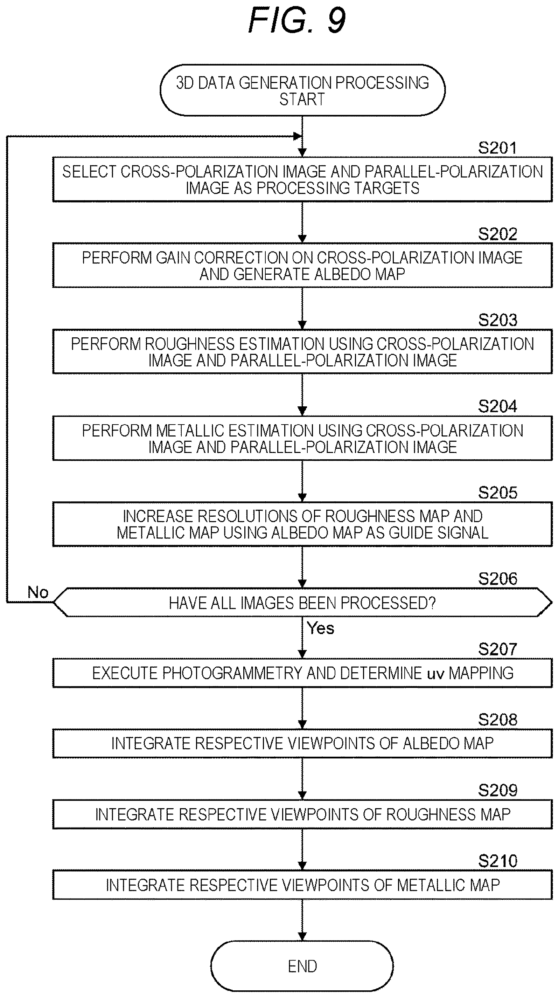

Next, an example of the flow of 3D data generation processing executed by such a 3D data generation device 200 will be described with reference to a flowchart in Fig. 9.

When the 3D data generation processing is started, in step S201, the 3D data generation device 200 acquires a cross-polarization image and a parallel-polarization image of a viewpoint as processing targets.

In step S202, the gain correction unit 211 performs gain correction on the cross-polarization image and generates an albedo map.

In step S203, the roughness estimation unit 212 performs roughness estimation using the cross-polarization image and the parallel-polarization image.

In step S204, the metallic estimation unit 213 performs metallic estimation using the cross-polarization image and the parallel-polarization image.

In step S205, the resolution increasing unit 214 increases the resolution of each of the roughness map generated in step S203 and the metallic map generated in step S204 by using the albedo map generated in step S202 as a guide signal.

In step S206, the 3D data generation device 200 determines whether or not all images have been processed. That is, it determines whether or not the cross-polarization image and the parallel-polarization image have been processed for all viewpoints. In a case where it is determined that there is an unprocessed image (that is, unprocessed viewpoint), the processing returns to step S201, and the subsequent processing is repeated. That is, for each viewpoint, the processing of steps S201 to S206 is executed. Then, in step S206, in a case where it is determined that the processing has been performed for all viewpoints, the processing proceeds to step S207.

In step S207, the geometry generation unit 232 executes photogrammetry. For example, the corresponding point detection unit 221 detects corresponding points between cross-polarization images (between viewpoints). Furthermore, the corresponding point detection unit 221 may also perform overlapping region determination. Furthermore, the imaging posture estimation unit 222 estimates the imaging posture on the basis of the corresponding points and the like. Furthermore, the geometry/normal estimation unit 223 estimates the geometry and normals on the basis of information such as the corresponding points and the imaging posture. Furthermore, the UV mapping determination unit 224 determines the UV mapping of the geometry and normals (the mapping locations of the geometry and normals on the UV plane) on the basis of information such as the geometry and the normals. The geometry/normal estimation unit 223 maps geometry and normals on the UV plane on the basis of the UV mapping (UV information).

In step S208, the albedo integration unit 215 integrates the albedo maps of respective viewpoints on the basis of the overlapping region determination result and the like. Furthermore, the albedo integration unit 215 also maps (embeds) the integrated albedo map on the UV plane on the basis of the UV information.

In step S209, the roughness integration unit 216 integrates the roughness maps of respective viewpoints on the basis of the overlapping region determination result and the like. Furthermore, the roughness integration unit 216 also maps (embeds) the integrated roughness map on the UV plane on the basis of the UV information.

In step S210, the metallic integration unit 217 integrates the metallic maps of respective viewpoints.

When the processing of step S210 ends, the 3D data generation processing ends.

By executing each processing in this manner, the present technology described in <3. Utilization of Cross-Polarization Image and Parallel-Polarization Image> can be applied to the 3D data generation device 200. Therefore, the 3D data generation device 200 can suppress degradation of the quality of material information.

<5. Integration of Material Information>

<Degradation of Quality of Roughness Map>

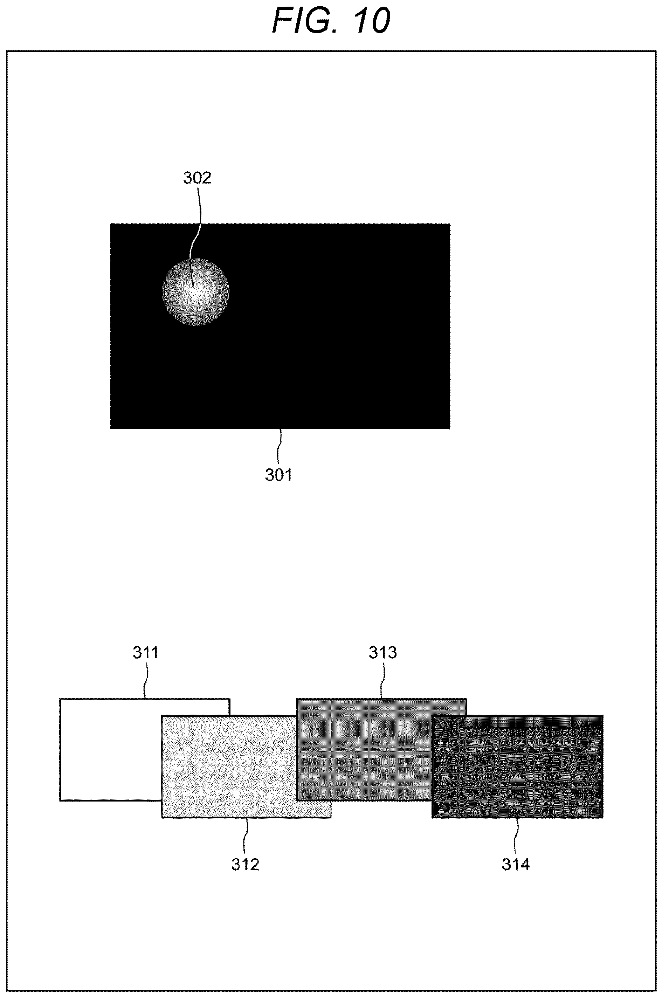

In the case of the method in the related art, there is a possibility that the quality of the roughness map is degraded. The roughness can be calculated from the point spread function (PSF) of the flash region. However, in a region near the peak of the PSF, the estimation accuracy becomes poor, and there is a possibility that the quality of the roughness map is degraded. For example, a flash region 302 formed in a roughness map 301 in Fig. 10 is a portion corresponding to the flash region (a portion where flash light is specularly reflected) included in the captured image, and a roughness value thereof may be affected by the specular reflection component. Therefore, the confidence level of the roughness value of the flash region 302 is reduced, and there is a possibility that the quality of the roughness map 301 is degraded.

Furthermore, the roughness maps of respective viewpoints are generated independently of each other. Therefore, in a case where multiple roughness maps of different viewpoints are integrated, there is a possibility that the levels of the roughness values are different among the roughness maps to be integrated. For example, in roughness maps 311 to 314 in Fig. 10, the differences in the levels of the roughness values are indicated by colors (from white to black). Note that, in the example in Fig. 10, for the sake of convenience of description, the roughness values of each roughness map are illustrated as being uniform, but in practice, the roughness values in a roughness map may vary pixel by pixel. The level of the roughness value refers to, for example, the magnitude of roughness value over the entire roughness map, such as an average value of roughness.

In this manner, when the roughness maps having different levels of roughness values are integrated, there is a possibility that a step of the roughness value (difference between the roughness values that become significantly noticeable as compared with other portions) is formed at a boundary portion of the roughness map. For example, when the roughness maps 311 to 314 in Fig. 10 are integrated, there is a possibility that steps of roughness values occur at the boundary portions of the respective roughness maps.

For example, in a case where there are overlapping portions as in the roughness maps 311 to 314 in Fig. 10, the roughness value of any roughness map including the overlapping portion is selected and applied as the roughness value of the overlapping portion. Therefore, at an edge of the overlapping portion, the roughness values of different roughness maps become adjacent to each other. Therefore, in a case where the levels of roughness values are different between the roughness maps to be integrated, there is a possibility that the roughness value is abruptly changed at such a boundary portion.

For example, even in a region where the roughness is originally uniform, steps of roughness values may occur at the boundary portions, and there is a possibility that the quality of the integrated roughness map is degraded.

Such degradation of the quality of roughness maps may result in subjective deterioration in texture.

<Method 2>

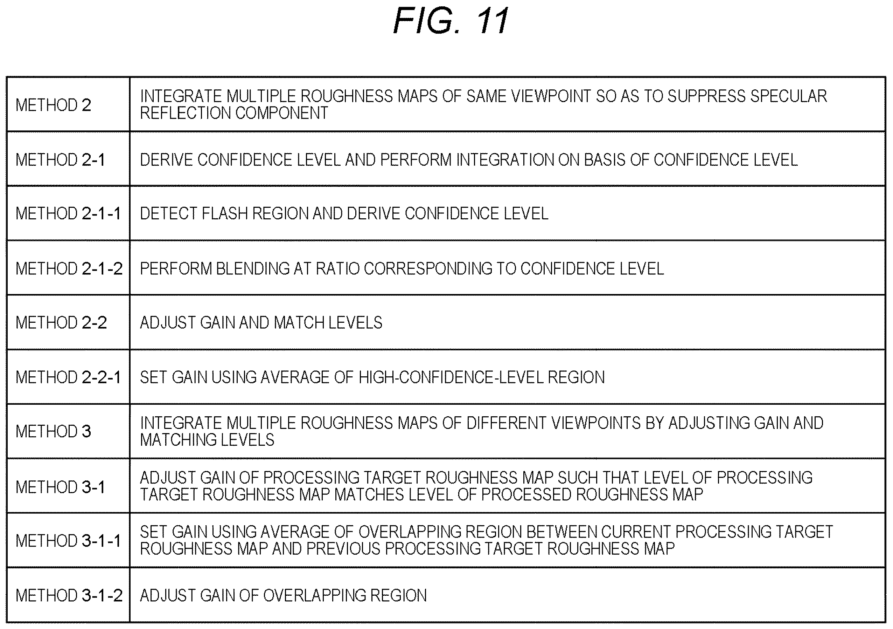

Therefore, for example, as illustrated in the top row of a table in Fig. 11, multiple roughness maps of the same viewpoint are integrated so as to suppress the specular reflection component (Method 2). For example, multiple captured images of the same viewpoint, in which the positions of flash regions are different, are prepared, roughness maps respectively corresponding to the multiple captured images are generated, and the multiple roughness maps are integrated. That is, multiple roughness maps of the same viewpoint, in which the positions of flash regions (regions affected by the flash regions) are different, are integrated.

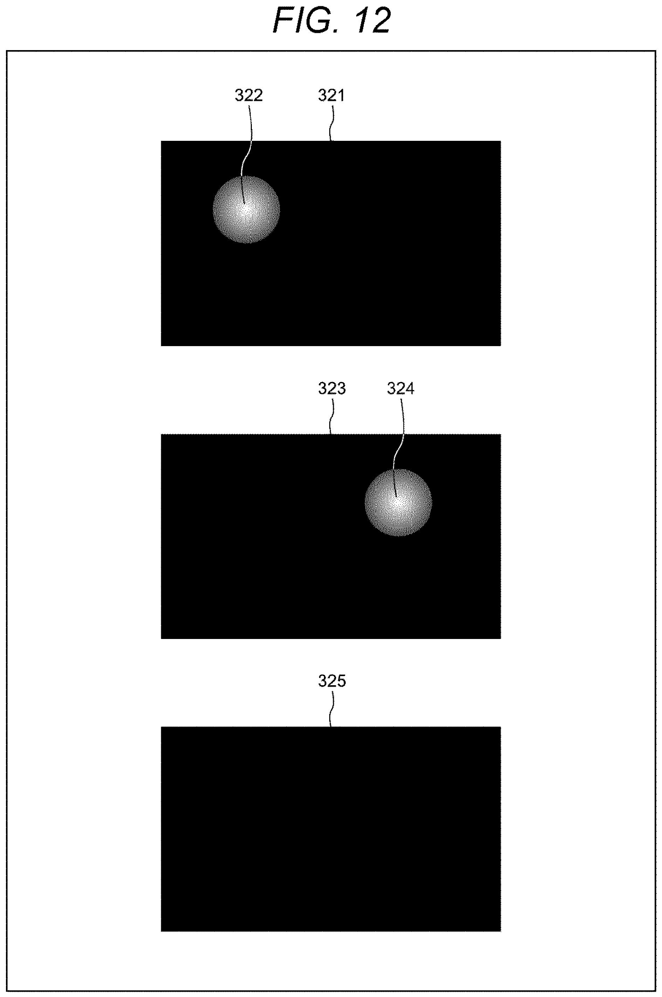

For example, it is assumed that a roughness map 321 and a roughness map 323 illustrated in Fig. 12 are roughness maps of the same viewpoint. That is, it is assumed that the entire image of the roughness map 321 and the entire image of the roughness map 323 are the overlapping region, and a roughness map 325 having the same size (same viewpoint) is generated by integrating the roughness map 321 and the roughness map 323.

Furthermore, the roughness map 321 includes a flash region 322 affected by flash light. Furthermore, the roughness map 323 includes a flash region 324 affected by flash light. However, as illustrated in Fig. 12, the flash region 322 and the flash region 324 are formed at different positions from each other.

In the integration of such roughness maps, for example, the roughness value of the roughness map 323 is applied to the flash region 322, and the roughness value of the roughness map 321 is applied to the flash region 324. By doing so, the roughness values of the flash region 322 and the flash region 324 cannot be included in the roughness map 325. That is, multiple roughness maps of the same viewpoint can be integrated so as to suppress the influence of the specular reflection component.

As described above, by integrating multiple roughness maps of the same viewpoint, the influence of the specular reflection component is suppressed in the integrated roughness map, and thus it is possible to suppress degradation of the quality of the integrated roughness map.

Method 2 may be applied in combination with Method 1 described above. For example, the roughness map generation unit of the above-described information processing device may integrate roughness maps respectively corresponding to multiple parallel-polarization images of the same viewpoint so as to suppress the specular reflection component.

<Method 2-1>

In a case where Method 2 is applied, for example, as illustrated in the second row from the top of the table in Fig. 11, the confidence level of the roughness values may be derived, and the roughness maps may be integrated on the basis of the confidence level (Method 2-1).

The confidence level of the roughness values in the roughness map is reduced, for example, due to the influence of the specular reflection component. The degree of reduction in the confidence level depends on the magnitude of the influence of the specular reflection component. That is, the confidence level of the roughness values in the roughness map is reduced in proportion to the magnitude of the specular reflection component included in the pixel values of the captured image.

Therefore, by deriving the confidence level of the roughness values and integrating roughness maps on the basis of the confidence level, it is possible to generate a roughness map having roughness values with a higher confidence level. Therefore, it is possible to suppress degradation of the quality of the integrated roughness map.

Method 2-1 may be applied in combination with Method 1 (or any one or more of Methods 1-1 to 1-5) described above. For example, the roughness map generation unit of the above-described information processing device may derive the confidence level of the roughness and integrate multiple roughness maps on the basis of the confidence level.

<Method 2-1-1>

In a case where Method 2-1 is applied, for example, as illustrated in the third row from the top of the table in Fig. 11, a flash region may be detected, and the confidence level may be derived on the basis of the detected flash region (Method 2-1-1).

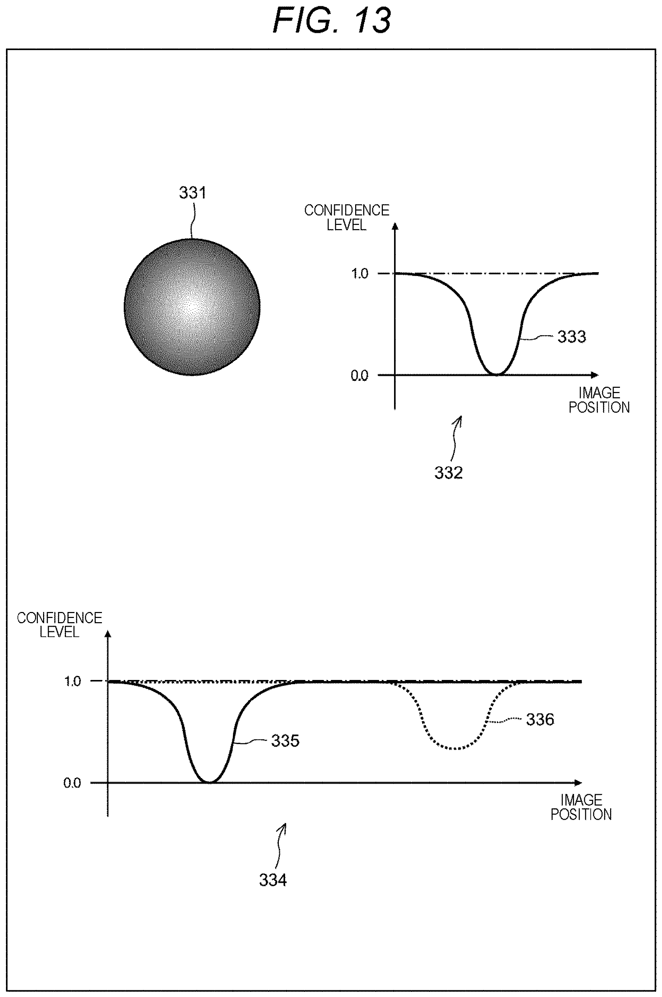

For example, it is assumed that a flash region 331 illustrated in Fig. 13 is present in a captured image. In the flash region 331, the diffuse reflection component is uniform, but the luminance is increased toward the center. That is, the closer to the center of the flash region 331, the larger the specular reflection component becomes. In such a case, the confidence level of the roughness values in the region of the roughness map corresponding to the flash region 331 is significantly reduced as the distance to the center of the region is decreased, as illustrated by a curve 333 in a graph 332.

In this manner, the confidence level of the roughness map is significantly reduced in the flash region. Therefore, by detecting the flash region and deriving the confidence level of the roughness map on the basis of the flash region, it is possible to more easily detect a region in which the confidence level of the roughness values is reduced.

For example, in a case where a confidence level distribution of the roughness map 321 and a confidence level distribution of the roughness map 323 in Fig. 12 are superimposed, it is assumed that the result is as illustrated by a graph 334 in Fig. 13. A solid curve 335 indicates the confidence level distribution of the roughness map 321, and the confidence level is reduced at the position of the flash region 322. Furthermore, a dotted curve 336 indicates the confidence level distribution of the roughness map 323, and the confidence level is reduced at the position of the flash region 324. In this manner, it is possible to easily detect positions where the confidence level is reduced on the basis of the positions of the flash regions.

Therefore, in such flash regions, it is only required to apply the roughness values of other roughness maps in which the confidence level is not reduced. By doing so, it is possible to suppress reduction in confidence level of the roughness values in the integrated roughness map, and to suppress degradation of the quality of the roughness map.

Method 2-1-1 may be applied in combination with Method 1 (or any one or more of Methods 1-1 to 1-5) described above. In this case, a flash region may be detected using a parallel-polarization image. Furthermore, a flash region may be detected using, instead of the parallel-polarization image, a difference image obtained by subtracting (pixel values of) the cross-polarization image from (pixel values of) the parallel-polarization image. For example, the roughness map generation unit of the above-described information processing device may generate a difference image between a parallel-polarization image and a cross-polarization image, detect a flash region included in the roughness map using the difference image, and derive the confidence level of the roughness values on the basis of the detected flash region.

As described above, the parallel-polarization image includes a diffuse reflection component (diffuse component) and a specular reflection component (specular component). The cross-polarization image mainly includes the diffuse reflection component (diffuse component). Therefore, the difference image mainly includes the specular reflection component (specular component).

Therefore, by detecting the flash region containing many specular reflection components using the difference image, it is possible to detect the flash region more easily and accurately than in the case of using a parallel-polarization image. Therefore, it is possible to more accurately suppress reduction in confidence level of the roughness values in the integrated roughness map, and to suppress degradation of the quality of the roughness map.

<Method 2-1-2>

In a case where Method 2-1 is applied, for example, as illustrated in the fourth row from the top of the table in Fig. 11, the roughness values of the respective roughness maps to be integrated may be blended at a ratio corresponding to the confidence level (Method 2-1-1).

In this manner, by blending the roughness values of a plurality of roughness maps and deriving the roughness values of the integrated roughness map, it is possible to integrate the roughness maps while taking into account the roughness values of the respective roughness maps. For example, in a case where the region does not correspond to the flash region, the roughness values of the roughness maps to be integrated all have a high confidence level. In such a case, by blending the roughness values of the respective roughness maps, it is possible to derive, as the roughness value of the integrated roughness map, values reflecting the roughness values of the respective roughness maps. By doing so, the variation of roughness values in the integrated roughness map can be made more natural (smoother), and degradation of the quality of the roughness map can be suppressed.

Method 2-1-2 may be applied in combination with Method 1 (or any one or more of Methods 1-1 to 1-5) described above. For example, the roughness map generation unit of the above-described information processing device may blend multiple roughness maps at a ratio corresponding to the confidence level. Furthermore, Method 2-1-2 may be applied in combination with Method 2-1-1 described above.

<Method 2-2>

In a case where Method 2 is applied, for example, as illustrated in the fifth row from the top of the table in Fig. 11, the gain of the roughness values of the respective roughness maps to be integrated may be adjusted to match the levels (Method 2-2).

By matching the levels of roughness maps in this manner before integration, it is possible to suppress the influence of differences in levels of roughness values among the roughness maps. Therefore, it is possible to suppress degradation of the quality of the integrated roughness map.

Method 2-2 may be applied in combination with Method 1 (or any one or more of Methods 1-1 to 1-5) described above. For example, the roughness map generation unit of the above-described information processing device may integrate the roughness maps by matching the respective levels of the roughness maps. Furthermore, Method 2-2 may also be applied in combination with Method 2-1 (or one or more of Methods 2-1-1 and 2-1-2) described above.

<Method 2-2-1>

In a case where Method 2-2 is applied, for example, as illustrated in the sixth row from the top of the table in Fig. 11, the gain may be set using the average of high-confidence-level regions (Method 2-2-1).

That is, in the respective roughness maps to be integrated, an average value of roughness of a region other than a region where the confidence level is reduced, such as a flash region, may be derived, and a gain to be multiplied to each roughness map may be set such that the average values of the respective roughness maps become closer to each other (so that the difference is reduced). By doing so, it is possible to match the levels of the respective roughness maps while suppressing the influence of the flash regions in which the confidence level is reduced. Therefore, it is possible to suppress degradation of the quality of the integrated roughness map.

Note that Method 2-2-1 may be applied in combination with Method 1 (or any one or more of Methods 1-1 to 1-5) described above. For example, the roughness map generation unit of the above-described information processing device may derive the confidence level of roughness and set a gain for matching the levels of the roughness maps on the basis of the confidence level. Furthermore, Method 2-2-1 may also be applied in combination with Method 2-1 (or one or more of Methods 2-1-1 and 2-1-2) described above.

Furthermore, the roughness map generation unit may generate a difference image between a parallel-polarization image and a cross-polarization image, detect a flash region included in the roughness map using the difference image, and derive the confidence level on the basis of the detected flash region.

Furthermore, the roughness map generation unit may also set a gain on the basis of the average value of roughness values of a region in which the confidence level is high, of the roughness map.

<Method 3>

Furthermore, for example, as illustrated in the seventh row from the top of the table in Fig. 11, multiple roughness maps of different viewpoints are integrated by adjusting the gain to match the levels (Method 3).

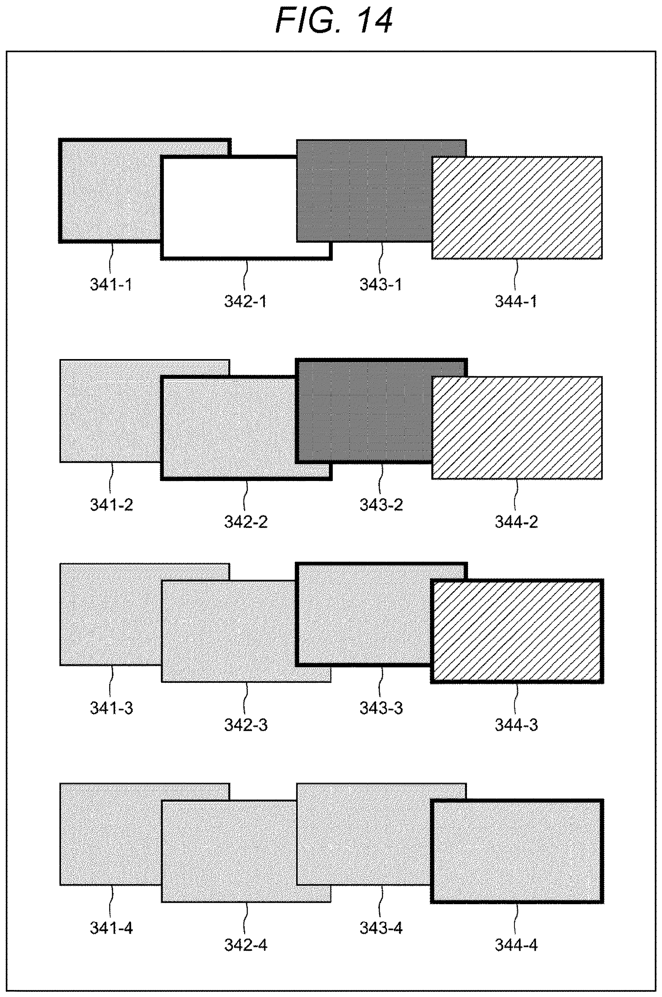

For example, it is assumed that, as in roughness maps 341-1 to 344-1 illustrated in Fig. 14, the levels of roughness values of multiple roughness maps of different viewpoints are different from each other. In a case of integrating such roughness maps 341-1 to 344-1, for example, the respective roughness maps may be integrated by adjusting the gain multiplied to the roughness values of the respective roughness maps to match the levels of the respective roughness maps. By doing so, it is possible to integrate the roughness maps while suppressing the differences in levels among the roughness maps, and thus it is possible to suppress the occurrence of steps of roughness values in the integrated roughness map. That is, it is possible to suppress degradation of the quality of the integrated roughness map.

Note that Method 3 may be applied in combination with Method 1 (or any one or more of Methods 1-1 to 1-5) described above. For example, the above-described information processing device may include a roughness integration unit that integrates multiple roughness maps corresponding to parallel-polarization images of different viewpoints by matching the respective levels. With such a configuration, the information processing device can suppress degradation of the quality of the integrated roughness map. Furthermore, Method 3 may be applied in combination with Method 2 (or any one or more of Methods 2-1 to 2-2-1) described above.

<Method 3-1>

In a case where Method 3 is applied, for example, as illustrated in the eighth row from the top of the table in Fig. 11, the gain of a processing target roughness map may be adjusted such that the level of the processing target roughness map matches that of a processed roughness map (Method 3-1).

For example, in a case of integrating multiple roughness maps of different viewpoints, the roughness maps may be processed (matched in level) one by one. For example, as illustrated in Fig. 14, in a case of integrating the roughness maps 341-1 to 344-1 by matching the levels, first, as indicated by a thick frame, the roughness map 342-1 is set as the processing target roughness map, and processing is performed such that the level of the roughness map 342-1 matches that of the roughness map 341-1. Next, the roughness map 343-2 is set as the processing target roughness map, and processing is performed such that the level of the roughness map 343-2 matches that of the roughness map 342-2 (the roughness map 342-1 of which the level has been matched to that of the roughness map 341-1). Next, the roughness map 344-3 is set as the processing target roughness map, and processing is performed such that the level of the roughness map 344-3 matches that of the roughness map 343-3 (the roughness map 343-2 of which the level has been matched to that of the roughness map 342-2).

By doing so, the levels of the respective roughness maps to be integrated can be aligned, as in roughness maps 341-4 to 344-4. By performing processing in such a flow, multiple roughness maps can be integrated by repeating the same processing. That is, the integration processing can be made easier.

Note that Method 3-1 may be applied in combination with Method 1 (or any one or more of Methods 1-1 to 1-5) described above. For example, in the above-described information processing device, the roughness integration unit may set the gain of the processing target roughness map such that the level of the processing target roughness map matches that of the processed roughness map. Furthermore, Method 3-1 may be applied in combination with Method 2 (or any one or more of Methods 2-1 to 2-2-1) described above.

<Method 3-1-1>

In a case where Method 3-1 is applied, for example, as illustrated in the ninth row from the top of the table in Fig. 11, the gain may be set using an average of roughness values of the overlapping region between the current processing target roughness map and the previous processing target roughness map (Method 3-1-1).

That is, the gain is set to match levels between roughness maps on the basis of the average of roughness values of the overlapping region. By doing so, the roughness values of the overlapping region can be made more natural, and degradation of the quality of the integrated roughness map can be suppressed.

Note that Method 3-1-1 may be applied in combination with Method 1 (or any one or more of Methods 1-1 to 1-5) described above. For example, in the above-described information processing device, the roughness integration unit may set the gain of the processing target roughness map using an average of roughness values of an overlapping region between the current processing target roughness map and the previous processing target roughness map. Furthermore, Method 3-1-1 may be applied in combination with Method 2 (or any one or more of Methods 2-1 to 2-2-1) described above.

<Method 3-1-2>

In a case where Method 3-1 is applied, for example, as illustrated in the bottom row of the table in Fig. 11, a gain multiplied to roughness values of an overlapping region may be adjusted (Method 3-1-2).

That is, the target of level matching may be set as the overlapping region of roughness maps. By limiting a target region of level matching to only a part of the region in this manner, it is possible to suppress degradation of the quality of the integrated roughness map while suppressing an increase in processing load.

Note that Method 3-1-2 may be applied in combination with Method 1 (or any one or more of Methods 1-1 to 1-5) described above. For example, in the above-described information processing device, the roughness integration unit may set the gain of the overlapping region of the processing target roughness map with the processed roughness map. Furthermore, Method 3-1-2 may be applied in combination with Method 2 (or any one or more of Methods 2-1 to 2-2-1) described above. Furthermore, Method 3-1-2 may be applied in combination with Method 3-1-1 described above.

Note that the region as a target of level matching may be any region. For example, the overlapping region and a part of a surrounding region thereof may be set as targets of level matching. That is, the gain may be multiplied to the roughness values of the region. Furthermore, the entire roughness map may be set as the target of level matching. That is, the gain may be multiplied to the roughness values of the entire roughness map.

<6. Second Embodiment>

<Roughness Estimation Unit>

Also in a case where the present technology described in <5. Integration of Material Information> is applied, the configuration of the 3D data generation device 200 is similar to the case of Fig. 8.

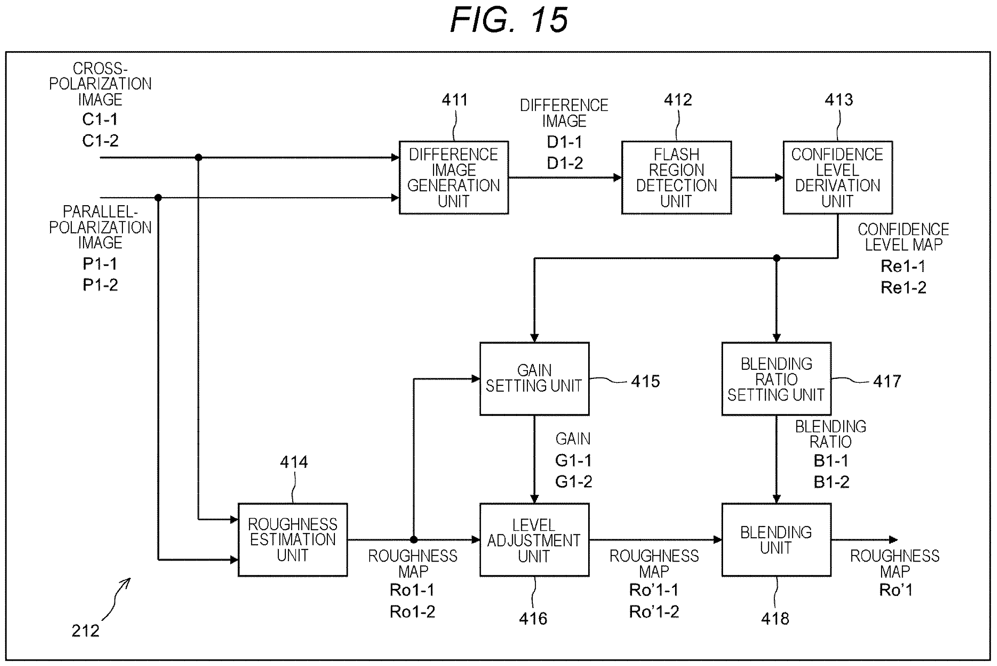

As described above, the 3D data generation device 200 may apply the present technology described in <5. Integration of Material Information>. That is, in this case, the roughness estimation unit 212 may apply Method 2 described above. Furthermore, the roughness estimation unit 212 may also apply Method 2-1 described above. Furthermore, the roughness estimation unit 212 may also apply Method 2-1-1 described above. Furthermore, the roughness estimation unit 212 may also apply Method 2-1-2 described above. Furthermore, the roughness estimation unit 212 may also apply Method 2-2 described above. Furthermore, the roughness estimation unit 212 may also apply Method 2-2-1 described above. Furthermore, the roughness estimation unit 212 may apply any combination of the plurality of methods. Fig. 15 is a block diagram illustrating a main configuration example of the roughness estimation unit 212 in a case where these methods are applied.

As illustrated in Fig. 15, the roughness estimation unit 212 includes a difference image generation unit 411, a flash region detection unit 412, a confidence level derivation unit 413, a roughness estimation unit 414, a gain setting unit 415, a level adjustment unit 416, a blending ratio setting unit 417, and a blending unit 418.

A pair of a cross-polarization image C1-1 and a parallel-polarization image P1-1 is input to the roughness estimation unit 212. Furthermore, with a different timing, a pair of a cross-polarization image C1-2 and a parallel-polarization image P1-2 is input to the roughness estimation unit 212. All of these captured images are captured images of the same viewpoint. Furthermore, in the cross-polarization images C1-1 and the cross-polarization image C1-2 (the parallel-polarization image P1-1 and the parallel-polarization image P1-2), flash regions are formed at different positions from each other.

The difference image generation unit 411 generates a difference image by subtracting a cross-polarization image from a parallel-polarization image. The difference image generation unit 411 supplies the generated difference image to the flash region detection unit 412. For example, the difference image generation unit 411 generates a difference image D1-1 using the parallel-polarization image P1-1 and the cross-polarization image C1-1, and supplies the difference image D1-1 to the flash region detection unit 412. Furthermore, the difference image generation unit 411 generates a difference image D1-2 using the parallel-polarization image P1-2 and the cross-polarization image C1-2, and supplies the difference image D1-2 to the flash region detection unit 412.

The flash region detection unit 412 detects a flash region included in the parallel-polarization image using the supplied difference image. The flash region detection unit 412 supplies information indicating the detected flash region, together with the difference image, to the confidence level derivation unit 413. For example, the flash region detection unit 412 detects a flash region using the difference image D1-1, and supplies information indicating the detected flash region, together with the difference image D1-1, to the confidence level derivation unit 413. Furthermore, the flash region detection unit 412 detects a flash region using the difference image D1-2, and supplies information indicating the detected flash region, together with the difference image D1-2, to the confidence level derivation unit 413.

The confidence level derivation unit 413 derives the confidence level of roughness values of the roughness map on the basis of the supplied information, that is, on the basis of the detected flash region. The confidence level derivation unit 413 derives the confidence level for each pixel, and generates a confidence level map, which is distribution information of the confidence level. The confidence level derivation unit 413 supplies the generated confidence level map to the gain setting unit 415 and the blending ratio setting unit 417. For example, the confidence level derivation unit 413 generates a confidence level map Re1-1 on the basis of the difference image D1-1 and its flash region, and supplies the confidence level map Re1-1 to the gain setting unit 415 and the blending ratio setting unit 417. Furthermore, the confidence level derivation unit 413 generates a confidence level map Re1-2 on the basis of the difference image D1-2 and its flash region, and supplies the confidence level map Re1-2 to the gain setting unit 415 and the blending ratio setting unit 417.

The roughness estimation unit 414 estimates roughness on the basis of the parallel-polarization image and the cross-polarization image, and generates a roughness map. The roughness estimation unit 414 supplies the generated roughness map to the gain setting unit 415 and the level adjustment unit 416. For example, the roughness estimation unit 414 estimates roughness on the basis of the parallel-polarization image P1-1 and the cross-polarization image C1-1, generates a roughness map Ro1-1, and supplies the roughness map Ro1-1 to the gain setting unit 415 and the level adjustment unit 416. Furthermore, the roughness estimation unit 414 estimates roughness on the basis of the parallel-polarization image P1-2 and the cross-polarization image C1-2, generates a roughness map Ro1-2, and supplies the roughness map Ro1-2 to the gain setting unit 415 and the level adjustment unit 416.

The gain setting unit 415 sets a gain to be multiplied to (the roughness values of) the roughness map on the basis of the supplied roughness map and confidence level map. The gain setting unit 415 supplies the set gain to the level adjustment unit 416. For example, the gain setting unit 415 sets a gain G1-1 for the roughness map Ro1-1 on the basis of the roughness map Ro1-1 and the confidence level map Re1-1, and supplies the gain G1-1 to the level adjustment unit 416. Furthermore, the gain setting unit 415 sets a gain G1-2 for the roughness map Ro1-2 on the basis of the roughness map Ro1-2 and the confidence level map Re1-2, and supplies the gain G1-2 to the level adjustment unit 416.

The level adjustment unit 416 multiplies the supplied (roughness values of) roughness map by the gain to perform level matching. The level adjustment unit 416 supplies the level-adjusted roughness map to the blending unit 418. For example, the level adjustment unit 416 multiplies the roughness map Ro1-1 by the gain G1-1, generates a level-adjusted roughness map Ro'1-1, and supplies the roughness map Ro'1-1 to the blending unit 418. Furthermore, the level adjustment unit 416 multiplies the roughness map Ro1-2 by the gain G1-2, generates a level-adjusted roughness map Ro'1-2, and supplies the roughness map Ro'1-2 to the blending unit 418.

The blending ratio setting unit 417 sets a blending ratio, which is a ratio for blending roughness values of roughness maps to be integrated, on the basis of the supplied confidence level maps. The blending ratio setting unit 417 supplies the set blending ratio to the blending unit 418. For example, the blending ratio setting unit 417 sets a blending ratio B1 on the basis of the confidence level map Re1-1 and the confidence level map Re1-2, and supplies the blending ratio B1 to the blending unit 418.

The blending unit 418 blends and integrates the multiple supplied roughness maps at the supplied blending ratio. The blending unit 418 supplies the integrated roughness map to the resolution increasing unit 214 (Fig. 8). For example, the blending unit 418 blends the roughness map Ro'1-1 and the roughness map Ro'1-2 at the blending ratio B1, generates an integrated roughness map Ro'1, and supplies the roughness map Ro'1 to the resolution increasing unit 214 (Fig. 8).

With such a configuration, the roughness estimation unit 212 can integrate multiple roughness maps of the same viewpoint such that the influence of the specular reflection component is suppressed. Therefore, the 3D data generation device 200 can suppress degradation of the quality of the roughness map.

<Roughness Integration Unit>

As described above, the 3D data generation device 200 may apply the present technology described in <5. Integration of Material Information>. That is, in this case, the roughness integration unit 216 may apply Method 3 described above. Furthermore, the roughness integration unit 216 may also apply Method 3-1 described above. Furthermore, the roughness integration unit 216 may also apply Method 3-1-1 described above. Furthermore, the roughness integration unit 216 may also apply Method 3-1-2 described above. Furthermore, the roughness integration unit 216 may apply any combination of the plurality of methods.

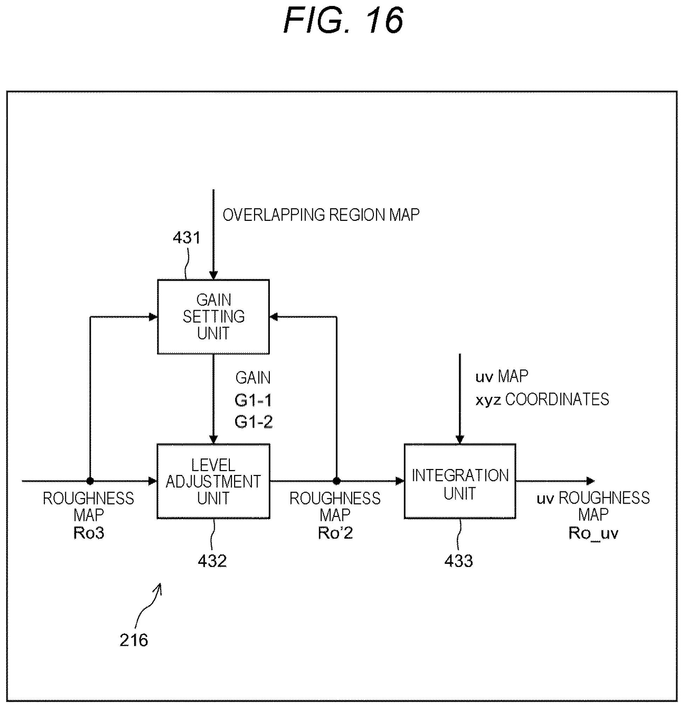

Fig. 16 is a block diagram illustrating a main configuration example of the roughness integration unit 216 in a case where these methods are applied.

As illustrated in Fig. 16, the roughness integration unit 216 includes a gain setting unit 431, a level adjustment unit 432, and an integration unit 433.

The gain setting unit 431 acquires an overlapping region map, which is a map indicating an overlapping region, supplied from the corresponding point detection unit 221 (Fig. 8). Furthermore, the gain setting unit 431 acquires a level-adjusted roughness map. Furthermore, the gain setting unit 431 acquires a processing target roughness map (a roughness map of which the level is to be adjusted). The gain setting unit 431 sets a gain (G1) for a processing target roughness map (Ro3) such that, for an overlapping region indicated by the overlapping region map, the level of the roughness values of the processing target roughness map Ro3 matches that of a level-adjusted roughness map (Ro'2). The gain setting unit 431 supplies the set gain to the level adjustment unit 432.

The level adjustment unit 432 adjusts the level of the processing target roughness map by multiplying the roughness values by the supplied gain. The level adjustment unit 432 supplies the level-adjusted roughness map to the integration unit 433.

The integration unit 433 integrates the sequentially supplied level-adjusted roughness maps by mapping the level-adjusted roughness maps on the UV plane. In this case, the integration unit 433 maps the level-adjusted roughness map on the UV plane on the basis of a uv map, xyz coordinates, and the like supplied from the UV mapping determination unit 224 (Fig. 8). The integration unit 433 outputs a uv roughness map Ro_uv, which is the integrated roughness map, to the outside of the 3D data generation device 200.

With such a configuration, the roughness integration unit 216 can integrate roughness maps while suppressing differences in levels among the roughness maps. Therefore, the roughness integration unit 216 can suppress the occurrence of steps of roughness values of the integrated roughness map. That is, the 3D data generation device 200 can suppress degradation of the quality of the roughness map.

<Flow of 3D Data Generation Processing>

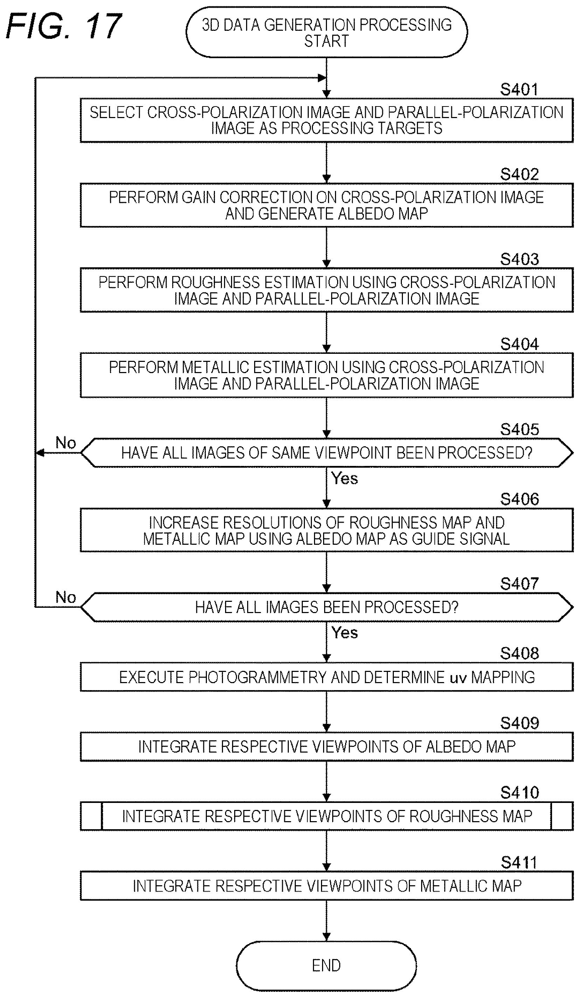

An example of a flow of 3D data generation processing executed by the 3D data generation device 200 in a case where the present technology described in <5. Integration of Material Information> is applied will be described with reference to the flowchart in Fig. 17.

In this case, each processing of steps S401 to S404 is executed in a flow similar to that of steps S201 to S204 in Fig. 9. However, in step S401, first, the captured images (the cross-polarization image and the parallel-polarization image) of the same viewpoint are preferentially selected. Furthermore, in step S403, roughness estimation processing, which will be described later, is executed.

In step S405, the 3D data generation device 200 determines whether or not all images of the same viewpoint have been processed. In a case where there is an unprocessed image, the processing returns to step S401, and the subsequent processing is repeated. Then, in a case where it is determined in step S405 that all images of the same viewpoint have been processed, the processing proceeds to step S406.

Each processing of steps S406 to S411 is executed in a flow similar to each processing of steps S205 to S210 in Fig. 9. However, in step S410, roughness integration processing, which will be described later, is executed.

When the processing in step S411 ends, the 3D data generation processing ends.

<Flow of Roughness Estimation Processing>

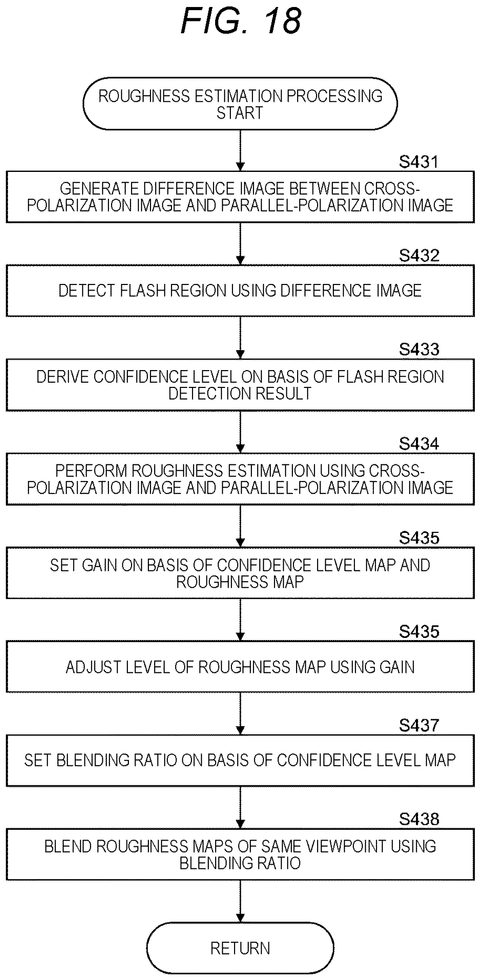

An example of a flow of roughness estimation processing executed in step S403 in Fig. 17 will be described with reference to the flowchart of Fig. 18.

When the roughness estimation processing is started, in step S431, the difference image generation unit 411 generates a difference image between a cross-polarization image and a parallel-polarization image.

In step S432, the flash region detection unit 412 detects a flash region using the difference image.

In step S433, the confidence level derivation unit 413 derives a confidence level of roughness values on the basis of a flash region detection result, and generates a confidence level map.

In step S434, the roughness estimation unit 414 performs roughness estimation using the cross-polarization image and the parallel-polarization image, and generates a roughness map.

In step S435, the gain setting unit 415 sets a gain on the basis of the confidence level map generated in step S433 and the roughness map generated in step S434.

In step S436, the level adjustment unit 416 adjusts the level of the roughness map using the gain.

In step S437, the blending ratio setting unit 417 sets a blending ratio on the basis of the confidence level map generated in step S433.

In step S438, the blending unit 418 blends the roughness maps of the same viewpoint using the blending ratio.

When the processing of step S438 ends, the processing returns to Fig. 17.

<Flow of Roughness Integration Processing>

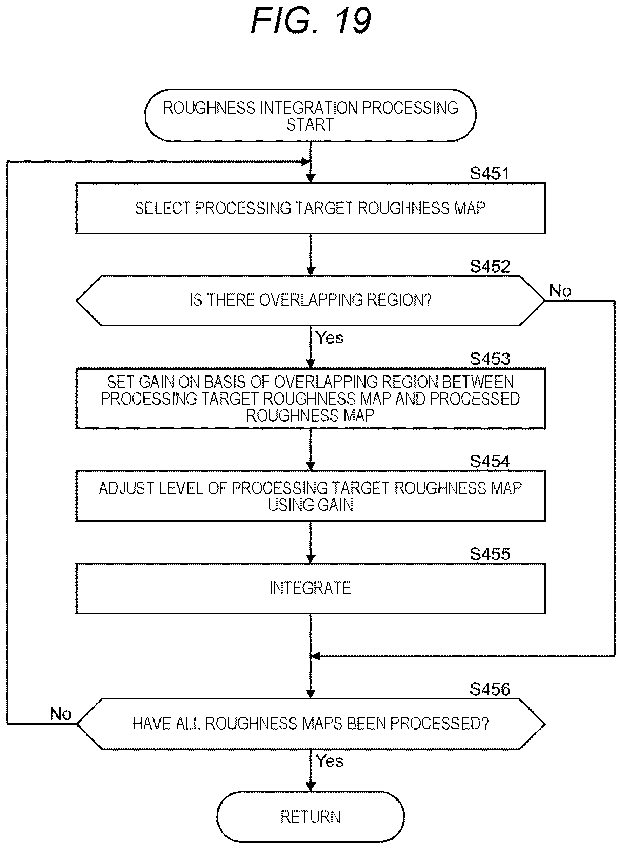

An example of a flow of roughness integration processing executed in step S410 in Fig. 17 will be described with reference to the flowchart of Fig. 19.

When the roughness integration processing is started, in step S451, the roughness integration unit 216 selects a processing target roughness map.

In step S452, the gain setting unit 431 determines whether or not there is an overlapping region. In a case where it is determined that there is an overlapping region, the processing proceeds to step S453.

In step S453, the gain setting unit 431 sets a gain on the basis of the overlapping region between the processing target roughness map and the processed roughness map.

In step S454, the level adjustment unit 432 adjusts the level of the processing target roughness map using the gain. When the processing in step S454 ends, the processing proceeds to step S455. Furthermore, in a case where it is determined in step S451 that there is no overlapping region, the processing proceeds to step S455.

In step S455, the integration unit 433 integrates the processing target roughness map with the processed roughness map.

In step S456, it is determined whether or not the roughness integration unit 216 has processed all the roughness maps. In a case where there is an unprocessed roughness map, the processing returns to step S451, and the subsequent processing is repeated. Then, in a case where it is determined in step S456 that all the roughness maps have been processed, the roughness integration processing ends, and the processing returns to Fig. 17.

By executing each processing as described above, the 3D data generation device 200 can suppress degradation of the quality of the roughness map.

<7. Third Embodiment>

<Imaging Device>

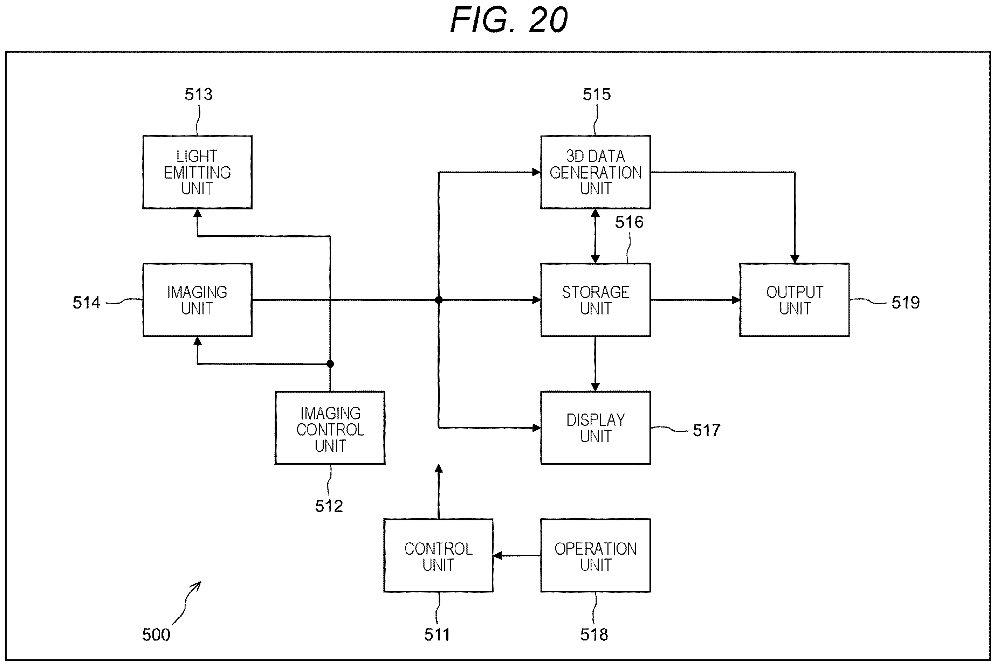

Note that the above-described present technology may be applied to any configuration. For example, the present technology may be applied to an imaging device that images a subject. Fig. 20 is a block diagram illustrating a main configuration example of the imaging device which is an embodiment of the information processing device to which the above-described present technology is applied. An imaging device 500 illustrated in Fig. 20 can perform cross-polarization imaging and parallel-polarization imaging, and the present technology described in <3. Utilization of Cross-Polarization Image and Parallel-Polarization Image> may be applied. For example, the imaging device 500 may apply Method 1 described above. Furthermore, the imaging device 500 may apply Method 1-1 described above. Furthermore, the imaging device 500 may apply Method 1-2 described above. Furthermore, the imaging device 500 may apply Method 1-3 described above. Furthermore, the imaging device 500 may apply Method 1-4 described above. Furthermore, the imaging device 500 may apply Method 1-5 described above. Furthermore, the imaging device 500 may apply any combination of the plurality of methods.

Furthermore, the imaging device 500 may apply the present technology described in <5. Integration of Material Information>. That is, in this case, the imaging device 500 may apply Method 2 described above. Furthermore, the imaging device 500 may apply Method 2-1 described above. Furthermore, the imaging device 500 may apply Method 2-1-1 described above. Furthermore, the imaging device 500 may apply Method 2-1-2 described above. Furthermore, the imaging device 500 may apply Method 2-2 described above. Furthermore, the imaging device 500 may apply Method 2-2-1 described above. Furthermore, the imaging device 500 may apply Method 3 described above. Furthermore, the imaging device 500 may apply Method 3-1 described above. Furthermore, the imaging device 500 may apply Method 3-1-1 described above. Furthermore, the imaging device 500 may apply Method 3-1-2 described above. Furthermore, the imaging device 500 may apply any combination of the plurality of methods. Of course, the imaging device 500 may apply any combination of the plurality of methods among Methods 1 to 3 (including each method belonging to those methods).

As illustrated in Fig. 20, the imaging device 500 includes a control unit 511, an imaging control unit 512, a light emitting unit 513, an imaging unit 514, a 3D data generation unit 515, a storage unit 516, a display unit 517, an operation unit 518, and an output unit 519.

The control unit 511 controls each processing unit of the imaging device 500. The imaging control unit 512 controls the light emitting unit 513 and the imaging unit 514 to execute cross-polarization imaging and parallel-polarization imaging. The light emitting unit 513 emits light and irradiates a 3D object with irradiation light. Note that the light emitting unit 513 has a configuration such as a polarization filter for polarizing the irradiation light, and polarizes the irradiation light in a first direction. The imaging unit 514 receives light from the subject and generates a captured image. The imaging unit 514 has a configuration such as a polarization filter for polarizing the light from the subject, and polarizes the light in a second direction. Note that in the case of cross-polarization imaging, the second direction is perpendicular to the first direction. Furthermore, in the case of parallel-polarization imaging, the second direction is parallel to the first direction (that is, the same direction as the first direction).

The 3D data generation unit 515 generates 3D data using cross-polarization images and parallel-polarization images supplied from the imaging unit 514. The 3D data generation unit 515 has a configuration similar to the 3D data generation device 200 in Fig. 8, and performs similar processing. That is, the 3D data generation unit 515 may execute processing by applying the present technology described above.

The storage unit 516 stores captured images supplied from the imaging unit 514 and 3D data supplied from the 3D data generation unit 515. The display unit 517 displays captured images supplied from the imaging unit 514 and images read out from the storage unit 516. The operation unit 518 receives an input operation by a user and the like, and supplies the information to the control unit 511. The control unit 511 may control each processing unit on the basis of the information.

The output unit 519 supplies captured images and 3D data read out from the storage unit 516 to the outside of the imaging device 500 (for example, to another information processing device).

With such a configuration, the imaging device 500 can suppress degradation of the quality of material information, similarly to the case of the 3D data generation device 200.

<Flow 1 of Imaging Processing>

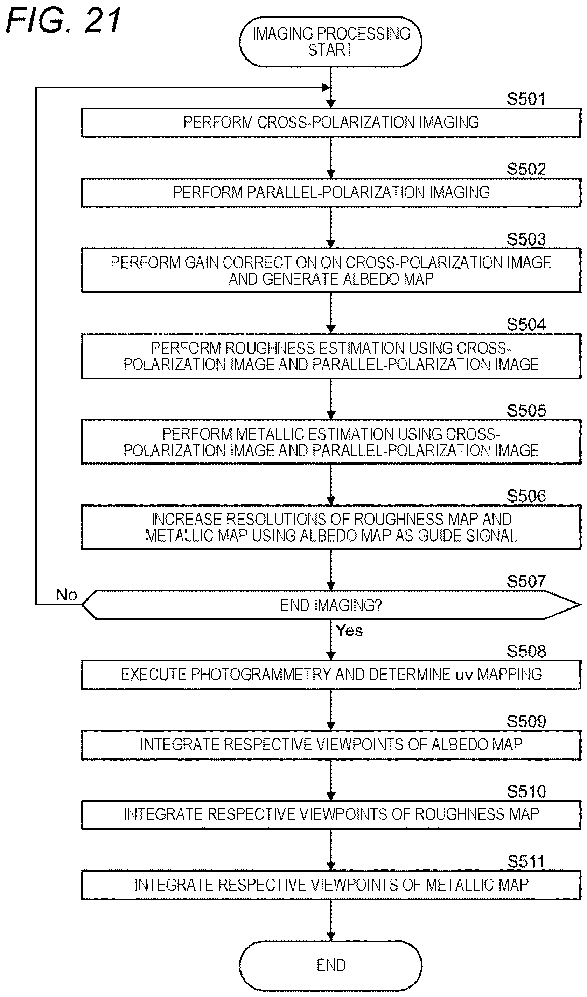

An example of a flow of imaging processing executed by the imaging device 500 will be described with reference to the flowchart of Fig. 21.

When the imaging processing is started, in step S501, the imaging control unit 512 controls the light emitting unit 513 and the imaging unit 514 to execute cross-polarization imaging, and generates a cross-polarization image.

In step S502, the imaging control unit 512 controls the light emitting unit 513 and the imaging unit 514 to perform parallel-polarization imaging, and generates a parallel-polarization image.

Each processing of steps S503 to S506 is executed similarly to each processing of steps S202 to S205 in Fig. 9.

In step S507, the control unit 511 determines whether or not to end the imaging. In a case where it is determined not to end the imaging, the processing returns to step S501, and the subsequent processing is repeated. Furthermore, in a case where it is determined to end the imaging in step S507, the processing proceeds to step S508.

Each processing of steps S508 to S511 is executed similarly to each processing of steps S207 to S210 in Fig. 9.

When the processing of step S511 ends, the imaging processing ends.

By executing each processing as described above, the imaging device 500 can suppress degradation of the quality of material information, similarly to the case of the 3D data generation device 200.

<Flow 2 of Imaging Processing>

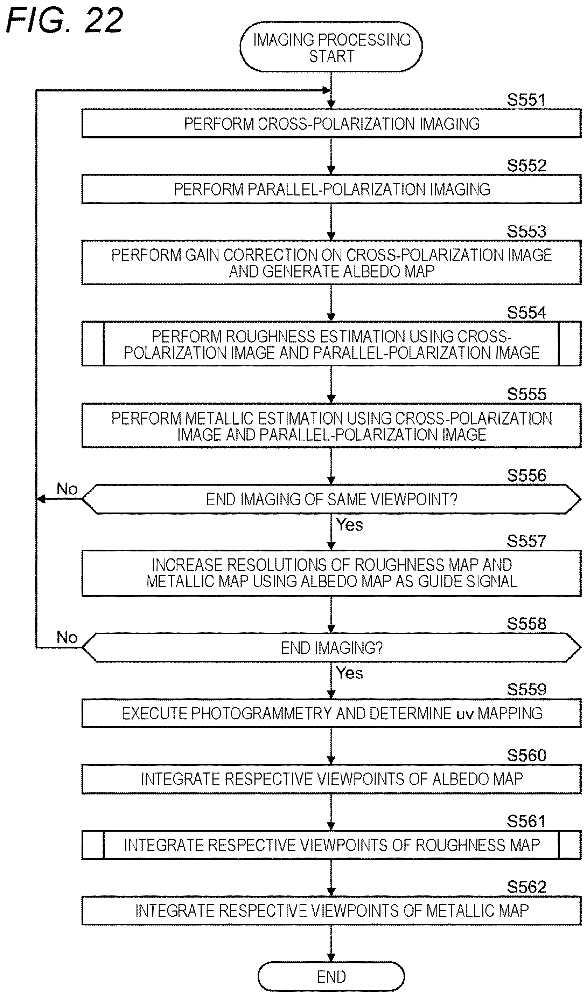

Another example of a flow of imaging processing executed by the imaging device 500 will be described with reference to the flowchart of Fig. 22.

When the imaging processing is started, each processing of steps S551 to S555 is executed similarly to each processing of steps S501 to S505 of Fig. 21. However, in step S551, first, the captured images (the cross-polarization image and the parallel-polarization image) of the same viewpoint are preferentially selected. Furthermore, in step S554, roughness estimation processing described with reference to Fig. 18 is executed.

In step S556, the 3D data generation device 200 determines whether or not to end the imaging of the same viewpoint. In a case where the imaging is not ended, the processing returns to step S551, and the subsequent processing is repeated. Then, in a case where it is determined to end the imaging of the same viewpoint in step S556, the processing proceeds to step S557.

Each processing of steps S557 to S562 is executed in a flow similar to each processing of steps S506 to S511 in Fig. 21. However, in step S561, roughness integration processing described with reference to Fig. 19 is executed.

When the processing of step S562 ends, the imaging processing ends.

By executing each processing as described above, the imaging device 500 can suppress degradation of the quality of material information, similarly to the case of the 3D data generation device 200.

<8. Supplementary Note>

<Computer>

The above-described series of processing can be executed by hardware or software. In a case where a series of processing is executed by software, a program included in the software is installed on a computer. Here, the computer includes a computer incorporated in dedicated hardware, a general-purpose personal computer capable of executing various functions by installing various programs, and the like, for example.

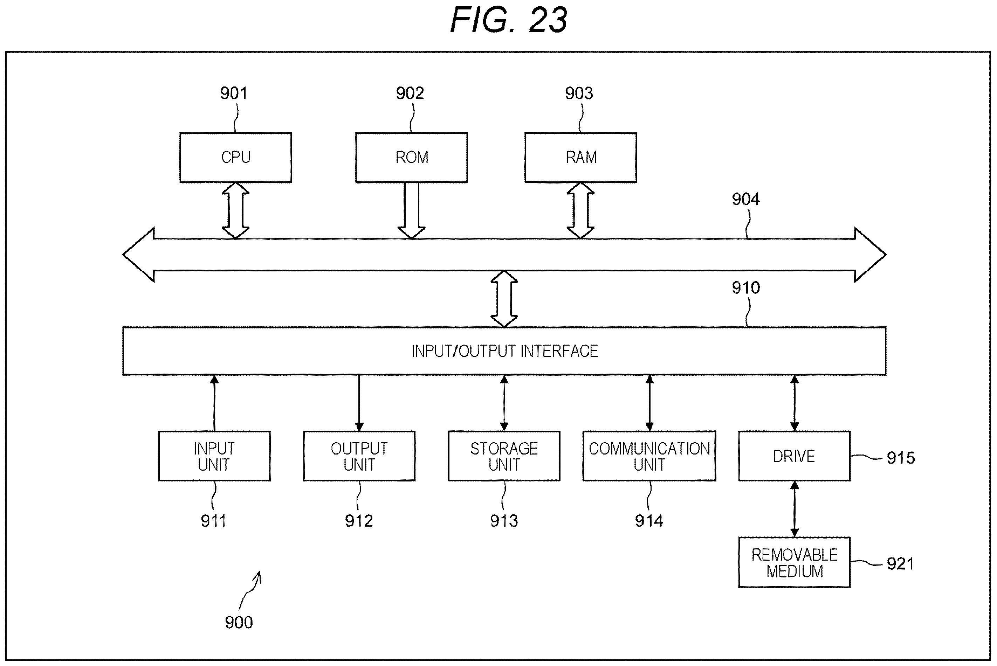

Fig. 23 is a block diagram illustrating a configuration example of hardware of a computer which executes a series of processing described above by a program.

In a computer 900 illustrated in Fig. 23, a central processing unit (CPU) 901, a read only memory (ROM) 902, and a random access memory (RAM) 903 are mutually connected via a bus 904.

Furthermore, an input/output interface 910 is also connected to the bus 904. An input unit 911, an output unit 912, a storage unit 913, a communication unit 914, and a drive 915 are connected to the input/output interface 910.

The input unit 911 includes, for example, a keyboard, a mouse, a microphone, a touch panel, an input terminal, and the like. The output unit 912 includes, for example, a display, a speaker, an output terminal, and the like. The storage unit 913 includes, for example, a hard disk, a RAM disk, a nonvolatile memory and the like. The communication unit 914 includes, for example, a network interface. The drive 915 drives a removable medium 921 such as a magnetic disk, an optical disk, a magneto-optical disk, or a semiconductor memory.

In the computer configured as described above, for example, the CPU 901 loads a program stored in the storage unit 913 into the RAM 903 via the input/output interface 910 and the bus 904 and executes the program, whereby the above-described series of processing is performed. The RAM 903 also appropriately stores data and the like necessary for the CPU 901 to execute various types of processing.

A program executed by the computer can be applied by being recorded on the removable medium 921 as a package medium, or the like, for example. In this case, the program can be installed in the storage unit 913 via the input/output interface 910 by attaching the removable medium 921 to the drive 915.

Furthermore, the program can also be provided through a wired or wireless transmission medium such as a local area network, the Internet, or digital satellite broadcasting. In this case, the program can be received by the communication unit 914 and installed in the storage unit 913.

In addition, this program can be installed in the ROM 902 or the storage unit 913 in advance.

<Applicable Target of Present Technology>

The present technology may be applied to any configuration. For example, the present technology may be applied to various electronic devices.

Furthermore, for example, the present technology can also be implemented as a partial configuration of a device, such as a processor (for example, a video processor) as a system large scale integration (LSI) or the like, a module (for example, a video module) using a plurality of the processors and the like, a unit (for example, a video unit) using a plurality of the modules and the like, or a set (for example, a video set) obtained by further adding other functions to the unit.

Furthermore, for example, the present technology can also be applied to a network system including a plurality of devices. For example, the present technology may be implemented as cloud computing shared and processed in cooperation by a plurality of devices through a network. For example, the present technology may be implemented in a cloud service that provides a service related to an image (moving image) to any terminal such as a computer, an audio visual (AV) device, a portable information processing terminal, or an Internet of Things (IoT) device.

Note that, in the present specification, a system means a set of a plurality of components (devices, modules (parts) and the like), and it does not matter whether or not all the components are in the same housing. Therefore, a plurality of devices stored in different housings and connected via a network and one device in which a plurality of modules is stored in one housing are both systems.

<Field and Application to Which Present Technology Is Applicable>

The system, device, processing unit and the like to which the present technology is applied can be used in any field such as traffic, medical care, crime prevention, agriculture, livestock industry, mining, beauty care, factory, household appliance, weather, and natural surveillance, for example. Furthermore, application thereof is also arbitrary.

<Others>

The embodiments of the present technology are not limited to the above-described embodiments, and various modifications can be made without departing from the gist of the present technology.

For example, a configuration described as one device (or processing unit) may be divided and configured as a plurality of devices (or processing units). Conversely, configurations described above as a plurality of devices (or processing units) may be collectively configured as one device (or processing unit). Furthermore, it goes without saying that a configuration other than the above-described configurations may be added to the configuration of each device (or each processing unit). Moreover, when the configuration and operation as the entire system are substantially the same, a part of the configuration of a certain device (or processing unit) may be included in the configuration of another device (or another processing unit).

Furthermore, for example, the above-described programs may be executed in an arbitrary device. In this case, the device is only required to have a necessary function (functional block or the like) and obtain necessary information.

Furthermore, for example, each step in one flowchart may be executed by one device, or may be executed by being shared by a plurality of devices. Moreover, in a case where a plurality of pieces of processing is included in one step, the plurality of pieces of processing may be executed by one device, or may be shared and executed by a plurality of devices. In other words, a plurality of pieces of processing included in one step can be executed as a plurality of steps. Conversely, the processing described as the plurality of the steps can also be collectively executed as one Step.

Furthermore, for example, in a program executed by the computer, processing of steps describing the program may be executed in a time-series order in the order described in the present specification, or may be executed in parallel or individually at a required timing such as when a call is made. That is, as long as there is no contradiction, the processing of each step may be executed in an order different from the above-described order. Moreover, the processing in the steps describing the program may be executed in parallel with processing of another program, or may be executed in combination with processing of the other program.

Furthermore, for example, a plurality of technical elements included in the present technology can be implemented independently as a single entity as long as there is no contradiction. Of course, the plurality of arbitrary technical elements can be implemented in combination. For example, a part or all of the present technologies described in any of the embodiments can be implemented in combination with a part or all of the present technologies described in other embodiments. Furthermore, a part or all of any of the above-described present technology can be implemented together with another technology that is not described above.

Note that the present technology can also have the following configurations.

(1) An information processing device including:

a roughness map generation unit that executes roughness estimation of estimating roughness of a surface of a 3D object using a cross-polarization image and a parallel-polarization image, and generates a roughness map as distribution information of the roughness corresponding to the parallel-polarization image,
in which the cross-polarization image is a captured image generated by cross-polarization imaging,
the parallel-polarization image is a captured image generated by parallel-polarization imaging,
the captured image is generated by irradiating a subject with light from a light emitting unit and receiving light from the subject with an imaging unit,
in a case of the cross-polarization image, light from the light emitting unit is polarized in a first polarization direction, and light from the subject is polarized in a second polarization direction perpendicular to the first polarization direction, and
in a case of the parallel-polarization image, light from the light emitting unit is polarized in the first polarization direction, and light from the subject is polarized in the first polarization direction.

(2) The information processing device according to (1),
in which the roughness map generation unit detects a flash region included in the parallel-polarization image by using a difference image between the parallel-polarization image and the cross-polarization image, analyzes the detected flash region, and executes the roughness estimation on the basis of an analysis result of the flash region.

(3) The information processing device according to (1) or (2), further including:
a resolution increasing unit that increases a resolution of the roughness map using an albedo map as a guide signal.

(4) The information processing device according to any one of (1) to (3), further including:
a metallic map generation unit that executes metallic estimation using the cross-polarization image and the parallel-polarization image, and generates a metallic map.

(5) The information processing device according to (4),
in which in a case where, for a processing target region, a pixel value of the parallel-polarization image is sufficiently larger than a pixel value of the cross-polarization image, the metallic map generation unit estimates that the subject is metallic.

(6) The information processing device according to (4) or (5), further including:
a resolution increasing unit that increases a resolution of the metallic map using an albedo map as a guide signal.

(7) The information processing device according to any one of (1) to (6), further including:
an albedo map generation unit that performs gain correction on the cross-polarization image, and generates an albedo map.

(8) The information processing device according to any one of (1) to (7),
in which the roughness map generation unit integrates roughness maps respectively corresponding to multiple parallel-polarization images of the same viewpoint such that a specular reflection component is suppressed.

(9) The information processing device according to (8),
in which the roughness map generation unit derives a confidence level of the roughness, and integrates the multiple roughness maps on the basis of the confidence level.

(10) The information processing device according to 9,
in which the roughness map generation unit generates a difference image between the parallel-polarization image and the cross-polarization image, detects a flash region included in the roughness map by using the difference image, and derives the confidence level on the basis of the detected flash region.

(11) The information processing device according to (9) or (10),
in which the roughness map generation unit blends the multiple roughness maps at a ratio corresponding to the confidence level.

(12) The information processing device according to any one of (8) to (11),
in which the roughness map generation unit integrates the roughness maps by matching levels of the roughness maps.

(13) The information processing device according to (12),
in which the roughness map generation unit derives a confidence level of the roughness, and sets a gain for matching the level of the roughness map on the basis of the confidence level.

(14) The information processing device according to (13),
in which the roughness map generation unit generates a difference image between the parallel-polarization image and the cross-polarization image, detects a flash region included in the roughness map by using the difference image, and derives the confidence level on the basis of the detected flash region.

(15) The information processing device according to (13) or (14),
in which the roughness map generation unit sets the gain on the basis of an average value of the confidence levels of a region where the confidence level of the roughness map is high.

(16) The information processing device according to any one of (1) to (15), further including:
a roughness integration unit that integrates multiple roughness maps corresponding to the parallel-polarization images of different viewpoints by matching levels of the multiple roughness maps.

(17) The information processing device according to (16),
in which the roughness integration unit sets a gain of a processing target roughness map such that a level of the processing target roughness map matches a level of a processed roughness map.

(18) The information processing device according to (17),
in which the roughness integration unit sets the gain using an average of the roughness of an overlapping region between the current processing target roughness map and the previous processing target roughness map.

(19) The information processing device according to (17) or (18),
in which the roughness integration unit sets the gain of an overlapping region of the processing target roughness map with the processed roughness map.

(20) An information processing method including:

executing roughness estimation of estimating roughness of a surface of a 3D object using a cross-polarization image and a parallel-polarization image, and generating a roughness map as distribution information of the roughness corresponding to the parallel-polarization image,
in which the cross-polarization image is a captured image generated by cross-polarization imaging,
the parallel-polarization image is a captured image generated by parallel-polarization imaging,
the captured image is generated by irradiating a subject with light from a light emitting unit and receiving light from the subject with an imaging unit,
in a case of the cross-polarization image, light from the light emitting unit is polarized in a first polarization direction, and light from the subject is polarized in a second polarization direction perpendicular to the first polarization direction, and
in a case of the parallel-polarization image, light from the light emitting unit is polarized in the first polarization direction, and light from the subject is polarized in the first polarization direction.

REFERENCE SIGNS LIST

| 200 | 3D data generation device |
|---|---|
| 211 | Gain correction unit |
| 212 | Roughness estimation unit |
| 213 | Metallic estimation unit |
| 214 | Resolution increasing unit |
| 215 | Albedo integration unit |
| 216 | Roughness unit |
| 217 | Metallic integration unit |
| 221 | Corresponding point detection unit |
| 222 | Imaging posture estimation unit |
| 223 | Geometry/normal estimation unit |
| 224 | UV mapping determination unit |
| 231 | Integration unit |
| 232 | Geometry generation unit |
| 411 | Difference image generation unit |
| 412 | Flash region detection unit |
| 413 | Confidence level derivation unit |
| 414 | Roughness estimation unit |
| 415 | Gain setting unit |
| 416 | Level adjustment unit |
| 417 | Blending ratio setting unit |
| 418 | Blending unit |
| 431 | Gain setting unit |
| 432 | Level adjustment unit |
| 433 | Integration unit |

500 Imaging device
511 Control unit
512 Imaging control unit
513 Light emitting unit
514 Imaging unit
515 3D data generation unit
516 Storage unit
517 Display unit
518 Operation unit
519 Output unit
900 Computer

## Claims

1. An information processing device comprising:

   a roughness map generation unit that executes roughness estimation of estimating roughness of a surface of a 3D object using a cross-polarization image and a parallel-polarization image, and generates a roughness map as distribution information of the roughness corresponding to the parallel-polarization image,
   wherein the cross-polarization image is a captured image generated by cross-polarization imaging,
   the parallel-polarization image is a captured image generated by parallel-polarization imaging,
   the captured image is generated by irradiating a subject with light from a light emitting unit and receiving light from the subject with an imaging unit,
   in a case of the cross-polarization image, light from the light emitting unit is polarized in a first polarization direction, and light from the subject is polarized in a second polarization direction perpendicular to the first polarization direction, and
   in a case of the parallel-polarization image, light from the light emitting unit is polarized in the first polarization direction, and light from the subject is polarized in the first polarization direction.

2. The information processing device according to claim 1,
   wherein the roughness map generation unit detects a flash region included in the parallel-polarization image by using a difference image between the parallel-polarization image and the cross-polarization image, analyzes the detected flash region, and executes the roughness estimation on a basis of an analysis result of the flash region.

3. The information processing device according to claim 1, further comprising:
   a resolution increasing unit that increases a resolution of the roughness map using an albedo map as a guide signal.

4. The information processing device according to claim 1, further comprising:
   a metallic map generation unit that executes metallic estimation using the cross-polarization image and the parallel-polarization image, and generates a metallic map.

5. The information processing device according to claim 4,
   wherein in a case where, for a processing target region, a pixel value of the parallel-polarization image is sufficiently larger than a pixel value of the cross-polarization image, the metallic map generation unit estimates that the subject is metallic.

6. The information processing device according to claim 4, further comprising:
   a resolution increasing unit that increases a resolution of the metallic map using an albedo map as a guide signal.

7. The information processing device according to claim 1, further comprising:
   an albedo map generation unit that performs gain correction on the cross-polarization image, and generates an albedo map.

8. The information processing device according to claim 1,
   wherein the roughness map generation unit integrates roughness maps respectively corresponding to multiple parallel-polarization images of the same viewpoint such that a specular reflection component is suppressed.

9. The information processing device according to claim 8,
   wherein the roughness map generation unit derives a confidence level of the roughness, and integrates the multiple roughness maps on a basis of the confidence level.

10. The information processing device according to claim 9,
    wherein the roughness map generation unit generates a difference image between the parallel-polarization image and the cross-polarization image, detects a flash region included in the roughness map by using the difference image, and derives the confidence level on a basis of the detected flash region.

11. The information processing device according to claim 9,
    wherein the roughness map generation unit blends the multiple roughness maps at a ratio corresponding to the confidence level.

**12.** The information processing device according to claim 8,
wherein the roughness map generation unit integrates the roughness maps by matching levels of the roughness maps.

**13.** The information processing device according to claim 12,
wherein the roughness map generation unit derives a confidence level of the roughness, and sets a gain for matching the level of the roughness map on a basis of the confidence level.

**14.** The information processing device according to claim 13,
wherein the roughness map generation unit generates a difference image between the parallel-polarization image and the cross-polarization image, detects a flash region included in the roughness map by using the difference image, and derives the confidence level on a basis of the detected flash region.

**15.** The information processing device according to claim 13,
wherein the roughness map generation unit sets the gain on a basis of an average value of the confidence levels of a region where the confidence level of the roughness map is high.

**16.** The information processing device according to claim 1, further comprising:
a roughness integration unit that integrates multiple roughness maps corresponding to the parallel-polarization images of different viewpoints by matching levels of the multiple roughness maps.

**17.** The information processing device according to claim 16,
wherein the roughness integration unit sets a gain of a processing target roughness map such that a level of the processing target roughness map matches a level of a processed roughness map.

**18.** The information processing device according to claim 17,
wherein the roughness integration unit sets the gain using an average of the roughness of an overlapping region between the current processing target roughness map and the previous processing target roughness map.

**19.** The information processing device according to claim 17,
wherein the roughness integration unit sets the gain of an overlapping region of the processing target roughness map with the processed roughness map.

**20.** An information processing method comprising:

executing roughness estimation of estimating roughness of a surface of a 3D object using a cross-polarization image and a parallel-polarization image, and generating a roughness map as distribution information of the roughness corresponding to the parallel-polarization image,
wherein the cross-polarization image is a captured image generated by cross-polarization imaging,
the parallel-polarization image is a captured image generated by parallel-polarization imaging,
the captured image is generated by irradiating a subject with light from a light emitting unit and receiving light from the subject with an imaging unit,
in a case of the cross-polarization image, light from the light emitting unit is polarized in a first polarization direction, and light from the subject is polarized in a second polarization direction perpendicular to the first polarization direction, and
in a case of the parallel-polarization image, light from the light emitting unit is polarized in the first polarization direction, and light from the subject is polarized in the first polarization direction.

FIG. 1

## FIG. 2

| METHOD 1 | PERFORM MATERIAL ESTIMATION USING CROSS-POLARIZATION IMAGE AND PARALLEL-POLARIZATION IMAGE |
|---|---|
| METHOD 1-1 | PERFORM GAIN CORRECTION ON CROSS-POLARIZATION IMAGE AND GENERATE ALBEDO MAP |
| METHOD 1-2 | PERFORM ROUGHNESS ESTIMATION BY ANALYZING GLOSSY PORTION OF PARALLEL-POLARIZATION IMAGE AND GENERATE ROUGHNESS MAP |
| METHOD 1-3 | PERFORM METALLIC ESTIMATION BY COMPARING CROSS-POLARIZATION IMAGE AND PARALLEL-POLARIZATION IMAGE AND GENERATE METALLIC MAP. |
| METHOD 1-4 | INCREASE RESOLUTIONS OF ROUGHNESS MAP AND METALLIC MAP USING ALBEDO MAP AS GUIDE SIGNAL |
| METHOD 1-5 | INTEGRATE RESPECTIVE VIEWPOINTS FOR EACH OF ALBEDO MAP, ROUGHNESS MAP, AND METALLIC MAP |

EP 4 715 368 A1

## FIG. 3

EP 4 715 368 A1

FIG. 4

# FIG. 5

# FIG. 6

# FIG. 7

$$out = \frac{1}{W_n} \sum_{n=1}^{N} \left( w_n p_n \right)$$

$$w_n = G_{\sigma s} \left( \| p - q \| \right) G_{\sigma r} \left( \| I_p - I_q \| \right)$$

151

152

$p_n$  : FILTER INPUT PIXEL VALUE (MATERIAL INFORMATION)

$w_n$  : COEFFICIENT MULTIPLIED BY EACH PIXEL VALUE

$n$  : FILTER POSITION

$N$  : FILTER SIZE

$W_n$ : FILTER COEFFICIENT NORMALIZATION)

$out$ : OUTPUT (MATERIAL INFORMATION)

$G_{\sigma s}$ : GAUSSIAN DISTRIBUTION OF SPATIAL CORRELATION

$G_{\sigma r}$ : GAUSSIAN DISTRIBUTION OF PIXEL VALUES

$I_p$  : GUIDE SIGNAL (Albedo)

$\| \ \|$ : NORM DISTANCE

FIG. 8

# FIG. 9

```
┌─────────────────────────────────────┐
│   3D DATA GENERATION PROCESSING      │
│              START                   │
└─────────────────────────────────────┘
                 │
                 ▼                          S201
┌─────────────────────────────────────────────────┐
│ SELECT CROSS-POLARIZATION IMAGE AND PARALLEL-    │
│ POLARIZATION IMAGE AS PROCESSING TARGETS         │
└─────────────────────────────────────────────────┘
                 │
                 ▼                          S202
┌─────────────────────────────────────────────────┐
│ PERFORM GAIN CORRECTION ON CROSS-POLARIZATION    │
│ IMAGE AND GENERATE ALBEDO MAP                    │
└─────────────────────────────────────────────────┘
                 │
                 ▼                          S203
┌─────────────────────────────────────────────────┐
│ PERFORM ROUGHNESS ESTIMATION USING CROSS-        │
│ POLARIZATION IMAGE AND PARALLEL-POLARIZATION     │
│ IMAGE                                            │
└─────────────────────────────────────────────────┘
                 │
                 ▼                          S204
┌─────────────────────────────────────────────────┐
│ PERFORM METALLIC ESTIMATION USING CROSS-         │
│ POLARIZATION IMAGE AND PARALLEL-POLARIZATION     │
│ IMAGE                                            │
└─────────────────────────────────────────────────┘
                 │
                 ▼                          S205
┌─────────────────────────────────────────────────┐
│ INCREASE RESOLUTIONS OF ROUGHNESS MAP AND        │
│ METALLIC MAP USING ALBEDO MAP AS GUIDE SIGNAL    │
└─────────────────────────────────────────────────┘
                 │
        No       ▼                          S206
   ◁─────< HAVE ALL IMAGES BEEN PROCESSED? >
                 │ Yes
                 ▼                          S207
┌─────────────────────────────────────────────────┐
│ EXECUTE PHOTOGRAMMETRY AND DETERMINE uv MAPPING  │
└─────────────────────────────────────────────────┘
                 │
                 ▼                          S208
┌─────────────────────────────────────────────────┐
│ INTEGRATE RESPECTIVE VIEWPOINTS OF ALBEDO MAP    │
└─────────────────────────────────────────────────┘
                 │
                 ▼                          S209
┌─────────────────────────────────────────────────┐
│ INTEGRATE RESPECTIVE VIEWPOINTS OF ROUGHNESS MAP │
└─────────────────────────────────────────────────┘
                 │
                 ▼                          S210
┌─────────────────────────────────────────────────┐
│ INTEGRATE RESPECTIVE VIEWPOINTS OF METALLIC MAP  │
└─────────────────────────────────────────────────┘
                 │
                 ▼
            ┌─────────┐
            │   END   │
            └─────────┘
```

# FIG. 10

# FIG. 11

| METHOD 2 | INTEGRATE MULTIPLE ROUGHNESS MAPS OF SAME VIEWPOINT SO AS TO SUPPRESS SPECULAR REFLECTION COMPONENT |
|---|---|
| METHOD 2-1 | DERIVE CONFIDENCE LEVEL AND PERFORM INTEGRATION ON BASIS OF CONFIDENCE LEVEL |
| METHOD 2-1-1 | DETECT FLASH REGION AND DERIVE CONFIDENCE LEVEL |
| METHOD 2-1-2 | PERFORM BLENDING AT RATIO CORRESPONDING TO CONFIDENCE LEVEL |
| METHOD 2-2 | ADJUST GAIN AND MATCH LEVELS |
| METHOD 2-2-1 | SET GAIN USING AVERAGE OF HIGH-CONFIDENCE-LEVEL REGION |
| METHOD 3 | INTEGRATE MULTIPLE ROUGHNESS MAPS OF DIFFERENT VIEWPOINTS BY ADJUSTING GAIN AND MATCHING LEVELS |
| METHOD 3-1 | ADJUST GAIN OF PROCESSING TARGET ROUGHNESS MAP SUCH THAT LEVEL OF PROCESSING TARGET ROUGHNESS MAP MATCHES LEVEL OF PROCESSED ROUGHNESS MAP |
| METHOD 3-1-1 | SET GAIN USING AVERAGE OF OVERLAPPING REGION BETWEEN CURRENT PROCESSING TARGET ROUGHNESS MAP AND PREVIOUS PROCESSING TARGET ROUGHNESS MAP |
| METHOD 3-1-2 | ADJUST GAIN OF OVERLAPPING REGION |

# FIG. 12

# FIG. 13

# FIG. 14

341-1

342-1

343-1

344-1

341-2

342-2

343-2

344-2

341-3

342-3

343-3

344-3

341-4

342-4

343-4

344-4

# FIG. 15

EP 4 715 368 A1

## FIG. 16

OVERLAPPING REGION MAP

431

GAIN
SETTING
UNIT

GAIN
G1-1
G1-2

uv MAP
xyz COORDINATES

LEVEL
ADJUSTMENT
UNIT

INTEGRATION
UNIT

ROUGHNESS
MAP
Ro3

ROUGHNESS
MAP
Ro'2

uv ROUGHNESS
MAP
Ro_uv

432

433

216

*FIG. 17*

```
          ( 3D DATA GENERATION PROCESSING )
          (            START             )
                        │
                        ▼                        S401
 ┌─────────────────────────────────────────────────────┐
 │ SELECT CROSS-POLARIZATION IMAGE AND PARALLEL-POLARIZATION │
 │         IMAGE AS PROCESSING TARGETS                    │
 └─────────────────────────────────────────────────────┘
                        │
                        ▼                        S402
 ┌─────────────────────────────────────────────────────┐
 │ PERFORM GAIN CORRECTION ON CROSS-POLARIZATION IMAGE    │
 │          AND GENERATE ALBEDO MAP                      │
 └─────────────────────────────────────────────────────┘
                        │
                        ▼                        S403
 ┌─────────────────────────────────────────────────────┐
 │ PERFORM ROUGHNESS ESTIMATION USING CROSS-POLARIZATION  │
 │     IMAGE AND PARALLEL-POLARIZATION IMAGE             │
 └─────────────────────────────────────────────────────┘
                        │
                        ▼                        S404
 ┌─────────────────────────────────────────────────────┐
 │ PERFORM METALLIC ESTIMATION USING CROSS-POLARIZATION   │
 │      IMAGE AND PARALLEL-POLARIZATION IMAGE            │
 └─────────────────────────────────────────────────────┘
                        │
                        ▼                        S405
    No  ◁───────────────────────────────────────────────▷
 ◁────── HAVE ALL IMAGES OF SAME VIEWPOINT BEEN PROCESSED?
                        │ Yes
                        ▼                        S406
 ┌─────────────────────────────────────────────────────┐
 │   INCREASE RESOLUTIONS OF ROUGHNESS MAP AND           │
 │ METALLIC MAP USING ALBEDO MAP AS GUIDE SIGNAL        │
 └─────────────────────────────────────────────────────┘
                        │
                        ▼                        S407
    No  ◁───────────────────────────────────────────────▷
 ◁────── HAVE ALL IMAGES BEEN PROCESSED?
                        │ Yes
                        ▼                        S408
 ┌─────────────────────────────────────────────────────┐
 │ EXECUTE PHOTOGRAMMETRY AND DETERMINE uv MAPPING        │
 └─────────────────────────────────────────────────────┘
                        │
                        ▼                        S409
 ┌─────────────────────────────────────────────────────┐
 │ INTEGRATE RESPECTIVE VIEWPOINTS OF ALBEDO MAP         │
 └─────────────────────────────────────────────────────┘
                        │
                        ▼                        S410
 ┌─────────────────────────────────────────────────────┐
 │ INTEGRATE RESPECTIVE VIEWPOINTS OF ROUGHNESS MAP      │
 └─────────────────────────────────────────────────────┘
                        │
                        ▼                        S411
 ┌─────────────────────────────────────────────────────┐
 │ INTEGRATE RESPECTIVE VIEWPOINTS OF METALLIC MAP       │
 └─────────────────────────────────────────────────────┘
                        │
                        ▼
                    (  END  )
```

# FIG. 18

$$\text{ROUGHNESS ESTIMATION PROCESSING START}$$

S431

GENERATE DIFFERENCE IMAGE BETWEEN CROSS-POLARIZATION IMAGE AND PARALLEL-POLARIZATION IMAGE

S432

DETECT FLASH REGION USING DIFFERENCE IMAGE

S433

DERIVE CONFIDENCE LEVEL ON BASIS OF FLASH REGION DETECTION RESULT

S434

PERFORM ROUGHNESS ESTIMATION USING CROSS-POLARIZATION IMAGE AND PARALLEL-POLARIZATION IMAGE

S435

SET GAIN ON BASIS OF CONFIDENCE LEVEL MAP AND ROUGHNESS MAP

S435

ADJUST LEVEL OF ROUGHNESS MAP USING GAIN

S437

SET BLENDING RATIO ON BASIS OF CONFIDENCE LEVEL MAP

S438

BLEND ROUGHNESS MAPS OF SAME VIEWPOINT USING BLENDING RATIO

RETURN

EP 4 715 368 A1

## FIG. 19

```
        ┌──────────────────────────────────────┐
        │  ROUGHNESS INTEGRATION PROCESSING    │
        │               START                  │
        └──────────────────────────────────────┘
                         │
                         ▼                        S451
        ┌──────────────────────────────────────┐
        │  SELECT PROCESSING TARGET ROUGHNESS MAP │
        └──────────────────────────────────────┘
                         │
                         ▼                        S452
        ◁──────────────────────────────────────▷   No
               IS THERE OVERLAPPING REGION?
                         │ Yes
                         ▼                        S453
        ┌──────────────────────────────────────┐
        │  SET GAIN ON BASIS OF OVERLAPPING     │
        │  REGION BETWEEN PROCESSING TARGET     │
        │  ROUGHNESS MAP AND PROCESSED          │
        │  ROUGHNESS MAP                        │
        └──────────────────────────────────────┘
                         │
                         ▼                        S454
        ┌──────────────────────────────────────┐
        │  ADJUST LEVEL OF PROCESSING TARGET    │
        │  ROUGHNESS MAP USING GAIN             │
        └──────────────────────────────────────┘
                         │
                         ▼                        S455
        ┌──────────────────────────────────────┐
        │              INTEGRATE                │
        └──────────────────────────────────────┘
                         │
                         ▼                        S456
   No   ◁──────────────────────────────────────▷
        HAVE ALL ROUGHNESS MAPS BEEN PROCESSED?
                         │ Yes
                         ▼
        ┌──────────────────────────────────────┐
        │              RETURN                  │
        └──────────────────────────────────────┘
```

44

## FIG. 20

EP 4 715 368 A1

*FIG. 21*

IMAGING PROCESSING START

S501
PERFORM CROSS-POLARIZATION IMAGING

S502
PERFORM PARALLEL-POLARIZATION IMAGING

S503
PERFORM GAIN CORRECTION ON CROSS-POLARIZATION IMAGE AND GENERATE ALBEDO MAP

S504
PERFORM ROUGHNESS ESTIMATION USING CROSS-POLARIZATION IMAGE AND PARALLEL-POLARIZATION IMAGE

S505
PERFORM METALLIC ESTIMATION USING CROSS-POLARIZATION IMAGE AND PARALLEL-POLARIZATION IMAGE

S506
INCREASE RESOLUTIONS OF ROUGHNESS MAP AND METALLIC MAP USING ALBEDO MAP AS GUIDE SIGNAL

S507
No — END IMAGING?

Yes

S508
EXECUTE PHOTOGRAMMETRY AND DETERMINE uv MAPPING

S509
INTEGRATE RESPECTIVE VIEWPOINTS OF ALBEDO MAP

S510
INTEGRATE RESPECTIVE VIEWPOINTS OF ROUGHNESS MAP

S511
INTEGRATE RESPECTIVE VIEWPOINTS OF METALLIC MAP

END

# FIG. 22

```
        ( IMAGING PROCESSING )
        (        START        )
                  |
                  v                              S551
  +--------------------------------------------------+
  |       PERFORM CROSS-POLARIZATION IMAGING         |
  +--------------------------------------------------+
                  |
                  v                              S552
  +--------------------------------------------------+
  |      PERFORM PARALLEL-POLARIZATION IMAGING       |
  +--------------------------------------------------+
                  |
                  v                              S553
  +--------------------------------------------------+
  | PERFORM GAIN CORRECTION ON CROSS-POLARIZATION    |
  |        IMAGE AND GENERATE ALBEDO MAP             |
  +--------------------------------------------------+
                  |
                  v                              S554
  +--------------------------------------------------+
  |   PERFORM ROUGHNESS ESTIMATION USING CROSS-      |
  |POLARIZATION IMAGE AND PARALLEL-POLARIZATION IMAGE|
  +--------------------------------------------------+
                  |
                  v                              S555
  +--------------------------------------------------+
  | PERFORM METALLIC ESTIMATION USING CROSS-         |
  | POLARIZATION IMAGE AND PARALLEL-POLARIZATION IMAGE|
  +--------------------------------------------------+
                  |
  No              v                              S556
 <---------< END IMAGING OF SAME VIEWPOINT? >
                  | Yes
                  v                              S557
  +--------------------------------------------------+
  |     INCREASE RESOLUTIONS OF ROUGHNESS MAP AND    |
  | METALLIC MAP USING ALBEDO MAP AS GUIDE SIGNAL    |
  +--------------------------------------------------+
                  |
  No              v                              S558
 <---------<         END IMAGING?          >
                  | Yes
                  v                              S559
  +--------------------------------------------------+
  | EXECUTE PHOTOGRAMMETRY AND DETERMINE uv MAPPING  |
  +--------------------------------------------------+
                  |
                  v                              S560
  +--------------------------------------------------+
  |    INTEGRATE RESPECTIVE VIEWPOINTS OF ALBEDO MAP |
  +--------------------------------------------------+
                  |
                  v                              S561
  +--------------------------------------------------+
  | INTEGRATE RESPECTIVE VIEWPOINTS OF ROUGHNESS MAP |
  +--------------------------------------------------+
                  |
                  v                              S562
  +--------------------------------------------------+
  | INTEGRATE RESPECTIVE VIEWPOINTS OF METALLIC MAP  |
  +--------------------------------------------------+
                  |
                  v
              (  END  )
```

FIG. 23

## INTERNATIONAL SEARCH REPORT

| International application No. |
|---|
| **PCT/JP2024/016191** |

### A. CLASSIFICATION OF SUBJECT MATTER

***G01N 21/21***(2006.01)i; ***G01N 21/57***(2006.01)i; ***G06T 7/40***(2017.01)i; ***G06V 10/14***(2022.01)i
FI:   G01N21/21 Z; G06T7/40; G06V10/14; G01N21/57

According to International Patent Classification (IPC) or to both national classification and IPC

### B. FIELDS SEARCHED

Minimum documentation searched (classification system followed by classification symbols)

G01N21/00-21/01; G01N21/17-21/61; G01N21/84-21/958; G06T1/00-1/40; G06T3/00-7/90; G06V10/00-20/90; G06V30/418; G06V40/16; G06V40/20; G01J3/00-4/04; G01J7/00-9/04; H04N5/222-5/257; H04N23/00; H04N23/40-23/76; H04N23/90-23/959

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| X | JP 2018-17611 A (CANON KABUSHIKI KAISHA) 01 February 2018 (2018-02-01) | 1,20 |
|  | paragraphs [0010]-[0038], fig. 1-9 |  |
| Y | paragraphs [0010]-[0038], fig. 1-9 | 4 |
| A | paragraphs [0010]-[0038], fig. 1-9 | 2-3, 5-19 |
| Y | WO 2022/259466 A1 (SONY INTERACTIVE ENTERTAINMENT INC.) 15 December 2022 (2022-12-15) | 4 |
|  | paragraph [0063] |  |
| A | JP 2013-33017 A (NATIONAL INSTITUTE OF ADVANCED INDUSTRIAL SCIENCE AND TECHNOLOGY) 14 February 2013 (2013-02-14) | 1-20 |
| A | WO 2005/047816 A1 (OPTONOVA AB) 26 May 2005 (2005-05-26) | 1-20 |

☐ Further documents are listed in the continuation of Box C.          ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 June 2024** | **25 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/016191**

| Patent document cited in search report | | | Publication date (day/month/year) | Patent family member(s) | | | Publication date (day/month/year) |
|---|---|---|---|---|---|---|---|
| JP | 2018-17611 | A | 01 February 2018 | (Family: none) | | | |
| WO | 2022/259466 | A1 | 15 December 2022 | (Family: none) | | | |
| JP | 2013-33017 | A | 14 February 2013 | (Family: none) | | | |
| WO | 2005/047816 | A1 | 26 May 2005 | EP | 1692460 | A1 | |

Form PCT/ISA/210 (patent family annex) (July 2022)

**EP 4 715 368 A1**

**Patent documents cited in the description**

- WO 2022259466 A

- WO 2019069536 A